(19) Europäisches Patentamt / European Patent Office / Office européen des brevets

(11) EP 1 767 564 B2

(12) NEW EUROPEAN PATENT SPECIFICATION
After opposition procedure

(45) Date of publication and mention of the opposition decision:
**25.09.2013 Bulletin 2013/39**

(45) Mention of the grant of the patent:
**11.11.2009 Bulletin 2009/46**

(21) Application number: **06020164.7**

(22) Date of filing: **26.09.2006**

(51) Int Cl.:
***C08G 65/32*** *(2006.01)*

# (54) POLYMER, A METHOD FOR PRODUCING THE POLYMER, AND A CEMENT ADMIXTURE USING THE SAME

POLYMER UND VERFAHREN ZU SEINER HERSTELLUNG UND ZEMENTMISCHUNG MIT POLYMER

POLYMERE ET SON PROCEDE DE PRODUCTION ET COMPOSITION DE CIMENT CONTENANT LE POLYMERE

(84) Designated Contracting States:
**DE ES FR IT**

(30) Priority: **26.09.2005 JP 2005278100**
**08.11.2005 JP 2005324043**

(43) Date of publication of application:
**28.03.2007 Bulletin 2007/13**

(73) Proprietor: **NIPPON SHOKUBAI CO., LTD.**
**Osaka-shi, Osaka-fu 541 (JP)**

(72) Inventors:
- **Sakamoto, Noboru**
  **Takatsuki-shi, Osaka (JP)**
- **Matsuda, Yuko**
  **Osaka-shi, Osaka (JP)**
- **Yuasa, Tsutomu**
  **Osaka-shi, Osaka (JP)**
- **Nishikawa, Tomotaka**
  **Yokohama-shi, Kanagawa (JP)**
- **Osamura, Hiroshi**
  **Ibo-gun, Hyogo (JP)**

(74) Representative: **Müller-Boré & Partner Patentanwälte**
**Grafinger Straße 2**
**81671 München (DE)**

(56) References cited:
**EP-A- 1 528 071**
**EP-A1- 1 541 550**
**EP-A2- 1 466 930**
**WO-A1-01/07494**
**WO-A2-2004/080908**
**US-A1- 2002 193 538**

## Description

The present invention relates to a polymer, a method for producing the polymer, a cement admixture, and the use of a catalyst as disclosed in the claims.

Polymers having a constitutional unit derived from a polyoxyalkylene chain have been widely used in dispersants for inorganic materials like cements as disclosed in Japanese Unexamined Patent Publication No. Hei 9-86990 and Japanese Unexamined Patent Publication No. 2001-220417. However, the conventional polymers have had a wide molecular weight distribution and contained a lot of high molecular weight portion causing coagulation of inorganic powders and a lot of low molecular weight portion contributing not so much dispersion performance.

Regarding a cement admixture in particular, ordinarily in outer wall materials for buildings and building structures, through processing with cement admixtures being added to cement paste that cement is added with water, to mortar that the cement paste is mixed with sand as a fine aggregate and to concrete that the mortar is mixed with stone as a coarse aggregate, the hardened concrete is enhanced in its strength and durability. As the above cement admixture, there is required a sufficient dispersion, flowability and workability even in lowering a water content (water reduction) of cement composition along with enhancement of durability and strength by reducing water. Accordingly, there is a need for a cement admixture capable of providing a high water reducing performance even in a small amount of addition.

Of the above cement admixtures, a polycarboxylic acid based cement admixture can provide a cement composition with high dispersion in comparison with other cement admixtures such as a naphthalene based one, so that it has been preferably used. For example, a cement admixture containing a copolymer composed of a specific unsaturated polyalkylene glycol ester based monomer and (meth)acrylic acid based monomer is disclosed in Japanese Unexamined Patent Publication Hei 9-86990 (1997). Also, Japanese Unexamined Patent Publication 2001-220417 discloses a cement admixture containing a copolymer composed of a specific unsaturated polyalkylene glycol ether based monomer, (meth) acrylic acid based monomer of unsaturated monocarboxylic acid, and maleic acid based monomer of unsaturated dicarboxylic acid. However, even the above cement admixtures have been somewhat insufficient from the point of water reducing performance.

There is a known living polymerization as a method to reduce a high molecular weight portion and a low molecular weight portion, namely to narrow a molecular weight distribution. For example, there is disclosed a method for synthesizing a resin containing an acidic dissociable group using a radical polymerization initiator and a tellurium compound (see Japanese Unexamined Patent Publication 2005-126459). Also, as a method for controlling molecular weight distribution of polymer, there is disclosed a method for obtaining a polymer through polymerization of vinyl monomer in two steps using an azo based polymerization initiator and a tellurium compound (see Japanese Unexamined Patent Publication 2004-323693). However, in the above methods, there is no disclosure of a polymer containing a constitutional unit derived from a polyalkylene glycol chain that is useful in a dispersant for inorganic powders.

In the foregoing situations, a problem to be solved by the invention is to provide a polymer having a specific parameter value with a very narrow molecular weight distribution different from the conventional copolymers despite of a polymer having a polyoxyalkylene chain, and an excellent dispersant for inorganic powders, particularly a cement admixture.

The present inventors have thought as follows: although polymers with a wide molecular weight distribution as described in Japanese Unexamined Patent Publications Hei 9-86990 (1997) and 2001-220417 exhibit a relatively high cement dispersing performance, but the high molecular weight portion disturbs the cement dispersing performance due to the effect of coagulation of cement particles and the low molecular weight portion does not contribute to dispersing performance due to the low cement particle dispersing performance. Therefore, the inventors have thought that cement dispersing performance would be further improved with a polymer having a narrow molecular weight distribution by reducing high molecular weight portion and low molecular weight portion not contributing to the dispersing performance, and prepared a polymer having a narrow molecular weight distribution to examine a dispersing performance. As a result, the inventors have prepared parameters based on the results obtained and found that a cement composition obtained by using a cement admixture containing a polymer in a specific range of parameter values has remarkably excellent dispersion. In this time, the inventors have found that a polymer satisfying the parameters can be easily produced by living polymerization of monomers containing an unsaturated monomer having a polyoxyalkylene chain, and accomplished the present invention.

<i> Namely, the present invention provides a polymer (P) as defined in claim 1.

<ii> Also, the present invention provides a mixture of an organometallic compound shown in the following chemical formula 1:

$$(M)\ a\ (L)\ b\ (X)\ c \qquad \text{(Chemical formula 1)}$$

wherein M represents a transition element belonging to the fourth period and L is represented by the following

chemical formula 2:

(AI) d (AO) e (AS) f (Chemical formula 2)

wherein AI represents alkyleneimine, AO represents alkylene oxide and AS represents alkylene sulfide; X represents halogen; and a, b, c d, e and f each independently represent number of not less than 0, and an organic halogen compound.

<iii> Further, the present invention provides a polymer (P) containing a constitutional unit derived from a polyoxyalkylene glycol chain, the polymer (P) obtained by polymerization of unsaturated monomers (M) containing an unsaturated polyalkylene glycol based monomer (I-M) using the above mixture.

<iv> Further, the present invention provides a polymer (P) containing a constitutional unit derived from a polyoxyalkylene glycol chain, wherein the polymer (P) is a polymer obtained by polymerization of unsaturated monomers (M) containing an unsaturated polyalkylene glycol based monomer (I-M) using a radical polymerization initiator and an organotellurium compound shown in the following chemical formula 3:

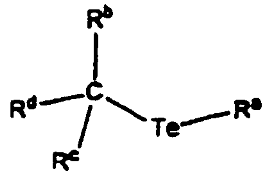

**(Chemical formula 3)**

wherein $R^a$ represents an alkyl group with carbon atoms of 1 to 8, an aryl group, a substituted aryl group or an aromatic heterocyclic group; $R^b$ and $R^c$ each independently represent a hydrogen atom or an alkyl group with carbon atoms of 1 to 8, $R^d$ represents an aryl group, a substituted aryl group, an aromatic heterocyclic group, an acyl group, an oxycarbonyl group or a cyano group; and/or, a ditelluride compound shown in the following chemical formula 4:

$R^fTe - TeR^g$ (Chemical formula 4)

wherein $R^f$ and $R^g$ each independently represent an alkyl group with carbon atoms of 1 to 8, an aryl group, a substituted aryl group or an aromatic heterocyclic group.

<v> The polymer described in the above <iii>, and <iv> must satisfie the range of PD value defined as the above mathematical formula 1 described in the above <i>.

<vi> The polymer of the present invention is characterized in that said polymer (P) containing a constitutional unit derived from a polyoxyalkylene chain comprises a constitutional unit derived from a polyoxyalkylene chain and a constitutional unit having a site derived from carboxyl group.

<vii> The constitutional unit derived from the polyoxyalkylene chain of said polymer (P) comprises a constitutional unit (I) shown in the following chemical formula 5:

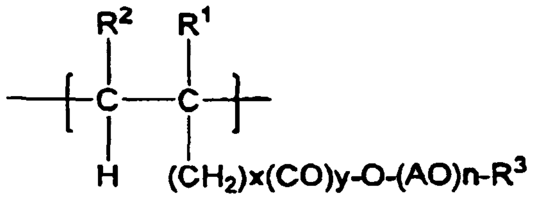

**(Chemical formula 5)**

wherein $R^1$ and $R^2$ each independently represent a hydrogen atom or a methyl group; AO each independently represents one sort of oxyalkylene groups with carbon atoms of 2 or more, or a mixture of 2 or more sorts thereof, the mixture may be added in a block or random manner; x represents an integer of 0 to 2, y represents 0 or 1, n represents an average addition number of moles of oxyalkylene groups being 1 to 300; and $R^3$ represents a hydrogen atom or a hydrocarbon group with carbon atoms of 1 to 20.

<viii> Also, the constitutional unit having a site derived from said carboxyl group preferably comprises a constitutional

unit (II) shown in the following chemical formula 6:

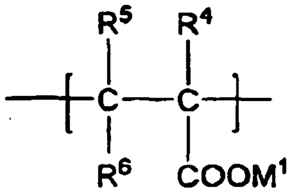

(Chemical formula 6)

wherein $R^4$, $R^5$ and $R^6$ each independently represent a hydrogen atom or a methyl group, $-(CH_2)_ZCOOM^2$, which may be an anhydride formed with $COOM^1$ or other $(CH_2)_ZCOOM^2$; z represents an integer of 0 to 2; $M^1$ and $M^2$ each independently represent a hydrogen atom, an alkali metal element, an alkali earth metal element, an ammonium group or an organic amine group.

<ix> Also, the present invention provides a production method of said polymer (P) containing a constitutional unit derived from a polyoxyalkylene chain, the production method for living polymerization of unsaturated monomers (M) containing an unsaturated monomer (I-M) having a polyoxyalkylene chain.

<x> In this case, it is preferable that living polymerization of monomers (M) containing an unsaturated polyalkylene glycol based monomer (I-M) is conducted using a mixture of an organometallic compound shown in the above chemical formula 1, and an organic halogen compound or

<xi> living polymerization of monomers (M) containing an unsaturated polyalkylene glycol based monomer (I-M) is conducted using an organotellurium compound shown in the above chemical formula 3 and/or ditelluride compound shown in the above chemical formula 4 and a radical polymerization initiator.

<xii> Also, in the case it is preferable that the unsaturated monomer (M) comprises an unsaturated monomer (II-M) having a site derived from carboxyl group.

<xiii> In a production method of the present invention, the unsaturated monomer (I-M) having said polyoxyalkylene chain is preferably an unsaturated monomer shown in the following chemical formula 7:

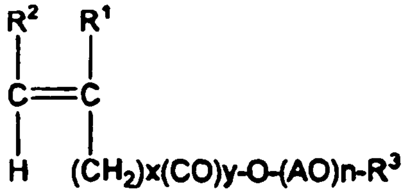

(Chemical formula 7)

wherein $R^1$ and $R^2$ each independently represent a hydrogen atom or a methyl group; AO each independently represents one sort of oxyalkylene groups with carbon atoms of 2 or more, or a mixture of 2 or more sorts thereof, the mixture may be added in a block or random manner; x represents an integer of 0 to 2, y represents 0 or 1, n represents an average addition number of moles of oxyalkylene groups being 1 to 300; and $R^3$ represents a hydrogen atom or a hydrocarbon group with carbon atoms of 1 to 20.

<xiv> Also, the unsaturated monomer (II- M) having a site derived from said carboxyl group preferably is an unsaturated monomer shown in the following chemical formula 8:

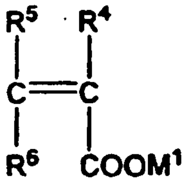

(Chemical formula 8)

wherein $R^4$, $R^5$ and $R^6$ each independently represent a hydrogen atom or a methyl group, $-(CH_2)_ZCOOM^2$, which may be an anhydride formed with $COOM^1$ or other- $(CH_2)_ZCOOM^2$; z represents an integer of 0 to 2; $M^1$ and $M^2$ are same or different, represent a hydrogen atom, an alkali metal element, an alkali earth metal element, an ammonium group or an organic amine group, a silyl group having a hydrocarbon group with carbon atoms of 3 to 18.

<xv> Further, the present invention provides a cement admixture containing any one of the above polymers as an essential component.

<xvi> Further, the present invention provides a cement admixture comprising a polymer (P) as an essential component, which polymer (P) is produced by the production method according to the above mentioned process.

A polymer of the present invention has a very narrow molecular weight distribution because a high molecular weight portion causing coagulation of inorganic powders and a low molecular weight portion contributing not so much to cement dispersion are reduced and the molecular weight distribution is confined to the limited range of specific parameter, so that the dispersing performance can be improved by using the polymer of the present invention in dispersant for inorganic powders. In the case of application to cement as inorganic powder, particularly, an excellent dispersing performance can be exhibited.

The polymer of the present invention is a polymer (P) containing a constitutional unit derived from a polyoxyalkylene chain, the polymer (P) is characterized by satisfying a range of PD value defined as the following mathematical formula 1:

$$1 < PD < MD - 0.2 \quad \text{(Formula 1)}$$

wherein PD = Mw/Mn, MD = G (n) × Mw + H (n), and G(n)×Mw is defined as the following mathematical formula 2:

$$G(n) \times Mw = \{-0.985 \times \ln(n) + 5.802\} \times 10^{-5} \times Mw \quad \text{(Formula 2)}$$

wherein n represents an average addition number of moles of oxyalkylene groups in the polymer (P) and Mw and Mn respectively represents a weight-average molecular weight and a number-average molecular weight of the polymer (P) measured by gel permeation chromatography (GPC), and H(n) is defined as the following mathematical formula 3:

$$H(n) = 4.513 \times 10^{-5} \times n^2 - 6.041 \times 10^{-3} \times n + 1.351 \quad \text{(Formula 3)}$$

wherein n represents an average addition number of moles of oxyalkylene groups in the polymer (P). Additionally, the MD value can be obtained by the following methods:

Calculation method of parameter

(1) A weight-average molecular weight (Mw) of polymer (P) is measured by gel permeation chromatography (GPC).
(2) An average addition number of moles (n) is measured by NMR or so when an average addition number of moles (n) of an oxyalkylene chain of polymer (P) is not known.
(3) MD value is obtained by substituting the values of weight-average molecular weight (Mw) and average addition number of moles (n) of an oxyalkylene chain obtained from the above (1) and (2) in the above mathematical formulas 1 to 3.

The above MD value is a parameter representing a molecular weight distribution (degree of dispersion). MD value will be explained below.

There is a strong correlation between Mw/Mn and Mw. In the case that a polymer has a long side chain like alkylene glycol, the side chain length (n) also affects Mw/Mn. Also, in the case of copolymer, the polymer composition affects the molecular weight distribution. Therefore, a molecular weight distribution of copolymer having a long side chain can be represented by a function of molecular weight, size of side chain and composition as shown in the following mathematical formula 4:

$$Mw / Mn = F (Mw, n, composition) \quad \text{(Formula 4)}$$

Although GPC measures relative values in principle, the above mathematical formula 4 becomes an intrinsic formula under a certain GPC condition, it has to be derived to be free of inconsistency from the results measured for various polymers under a given condition. Derivation of the above mathematical formula 4 was carried out in the GPC condition described below.

From the results measured for a lot of polymers changed variously in Mw, n and composition, when a polymer to be measured does not adhere to GPC columns, the composition can be neglected because of its small influence on measurements, and the parameter value of molecular weight distribution (MD) can be represented by the following mathematical formula 5:

$$MD = G (n) \times Mw + H (n) \quad \text{(Formula 5)}$$

wherein the first term on the right side represents an influence of Mw on Mw/Mn, the second term on the right side represents an influence of polyoxyalkylene chain length (n) on Mw/Mn.

For polymers having different Mw in a certain oxyalkylene chain length (n), when Mw is plotted on X axis, and Mw/Mn on Y axis, the relationship between them is represented in a linear function, G(n) value of the side chain length was calculated from the slope, H(n) value of the oxyalkylene chain length (n) was calculated from the intersept. For polymers having another oxyalkylene chain length (n), G(n) and H(n) were calculated in the same manner.

Next, when n is plotted on X axis and G (n) on Y axis, the relationship between them is fairly represented approximately by the following mathematical formula 6 in natural logarithm:

$$G (n) = \{a1 \times \ln (n) + a2\} \times 10^{-5} \quad \text{(Formula 6)}$$

wherein a1 and a2 are constants determined by measured values, al was- 0.985 and a2 was 5. 802.

Further, when n is plotted on X axis and H (n) on Y axis, the relationship between them is fairly represented approximately by the following quadratic mathematical formula 7:

$$H (n) = b1 \times n^2 + b2 \times n + b3 \quad \text{(Formula 7)}$$

wherein b1, b2 and b3 are constants determined by measured values, b1 was 4.513 $\times$ $10^{-5}$, b2 was- 6.041 $\times$ $10^{-3}$ and b3 was 1.351. Accordingly, the above mathematical formula 5 is shown in the following mathematical formula 8:

$$MD = \{-0.985 \times \ln (n) + 5.802\} \times 10^{-5} \times Mw + 4.513 \times 10^{-5} \times n^2 - 6.041 \times 10^{-3} \times n + 1.351 \quad \text{(Formula 8)}$$

The range of PD value of polymer (P) of the present invention is 1< PD < MD - 0.2 using molecular weight distribution parameter value (degree of dispersion) i.e. MD value obtained by the above mathematical formula 8.

For example, for (a) a polymer with a weight-average molecular weight of 30,000 and an average addition number of moles of oxyalkylene chain of 25, G(n)$\times$Mw = 0.789, H(n) = 1.226, and molecular weight distribution parameter value, MD = 0.789 + 1.226 = 2.015. Also, (b) a polymer with a weight-average molecular weight of 40,000 and an average addition number of moles of oxyalkylene chain of 50, G(n)$\times$Mw = 0.779, H(n) = 1.160, and molecular weight distribution parameter value, MD = 0.779 + 1.160 = 1.939.

Also, the above molecular weight distribution parameter value (MD value) is a parameter representing degree of dispersion (Mw/Mn) of polymer, the larger the value, the larger the degree of dispersion and the wider the molecular weight distribution of polymer; and the smaller the value, the smaller the degree of dispersion and the narrower the molecular weight distribution of polymer, are represented. The polymer (P) of the present invention has a PD value in

the range of less than the above molecular weight distribution parameter value (MD value) minus 0.2, which means that the molecular weight distribution is very narrow.

When the above PD is in the relation of 1<PD<MD - 0.2, it is not particularly limited, but from the point that the narrower molecular weight distribution (degree of dispersion) further improves the dispersing performance for inorganic powders, it is preferably PD<MD-0.25, further preferably PD<MD-0.3, and further preferably PD<MD-0.35. Also, from the point of polymer production, it is preferably 1.05<PD, further preferably 1.1<PD, further preferably 1.15<PD, further preferably 1.2<PD, further preferably 1.25<PD, and further preferably 1.3<PD.

As a polymer (P) of the present invention containing a constitutional unit derived from a polyoxyalkylene chain, there is a polymer obtained by a specific polymerization method.

For example, by using a new catalyst system, in particular, there is a method for polymerizing highly polarized monomers as a (meth)acryl based monomer or polymer having a polyalkylene glycol side chain in bulk or highly polarized solvent. The new catalyst system is a mixture of an organometallic compound shown in the following chemical formula 1:

(M) a (L) b (X) c (Chemical formula 1)

wherein M represents a transition element belonging to the fourth period and L is represented by the following chemical formula 2:

(AI) d (AO) e (AS) f (Chemical formula 2)

wherein AI represents alkyleneimine, AO represents alkylene oxide and AS represents alkylene sulfide; X represents halogen; and a, b, c d, e and f each independently represent number of not less than 0.
and an organic halogen compound shown in the following chemical formula 9:

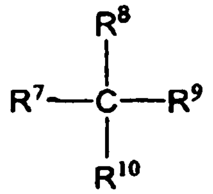

(Chemical formula 9)

wherein $R^7$, $R^8$, $R^9$ and $R^{10}$ each independently represent a hydrogen atom, a hydrocarbon group or a halogen atom, a hydrocarbon group may contain one or more halogen atoms or hetero atoms.

The above catalyst system is composed of one sort of compounds shown in the above chemical formula 1 or, 2 or more sorts thereof and one sort of compounds shown in the above chemical formula 9 or, 2 or more sorts thereof.

The polymer (P) of the present invention containing a constitutional unit derived from a polyoxyalkylene chain can be produced by polymerization of unsaturated monomers (M) containing an unsaturated monomer (I-M) having a polyalkylene glycol chain using the new catalyst system.

As another specific example of the polymer (P) of the present invention containing a constitutional unit derived from a polyoxyalkylene chain, it is a polymer obtained by polymerization of unsaturated monomers (M) containing an unsaturated monomer (I-M) having polyalkylene glycol chain using a polymerization initiator and an organotellurium compound shown in the following chemical formula 3:

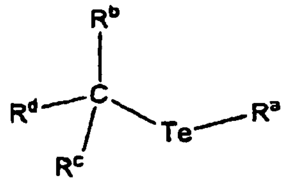

(Chemical formula 3)

wherein $R^a$ represents an alkyl group with carbon atoms of 1 to 8, an aryl group, a substituted aryl group or an aromatic heterocyclic group; $R^b$ and $R^c$ each independently represent a hydrogen atom or an alkyl group with carbon atoms of 1

to 8; $R^d$ represents an aryl group, a substituted aryl group, an aromatic heterocyclic group, an acyl group, an oxycarbonyl group or a cyano group; and/or, a ditelluride compound shown in the following chemical formula 4:

$R^fTe - TeR^g$ (Chemical formula 4)

wherein $R^f$ and $R^g$ each independently represent an alkyl group with carbon atoms of 1 to 8, an aryl group, a substituted aryl group or an aromatic heterocyclic group.

Polymer containing a constitutional unit derived from a polyoxyalkylene chain

The polymer (P) of the present invention containing a constitutional unit derived from a polyoxyalkylene chain is not particularly limited as long as it contains a constitutional unit derived from a polyoxyalkylene chain in the polymer, but a structure that a polyoxyalkylene chain is grafted to a main chain of polymer is preferred. A constitutional unit derived from a polyoxyalkylene chain contains preferably 2 to 98% by weight relative to the total weight of polymer, more preferably 50% or more by weight, further preferably 60% or more by weight, further preferably 65% or more by weight, and further preferably 70% or more by weight. When calculating a percent by mass, in case that a constitutional unit of the polymer has a functional group capable of forming a salt such as an acid or a base, mass will be calculated in a state that the polymer is not forming any salt (for example, a carboxylic salt is to be converted to a carboxylic acid, an amine salt is to be converted to amine). This calculation will be applied hereinafter.

Also, the sorts of oxyalkylene groups composing an oxyalkylene chain and an average addition number of moles are not particularly limited, but an oxyalkylene group with carbon atoms of 2 to 18 is preferred, an oxyalkylene group with carbon atoms of 2 to 8 is further preferred- Also, from the point of dispersing performance for inorganic powders using water as a medium, it is necessary to increase hydrophilicity of oxyalkylene group, it is preferable that oxyethylene group with 2 carbon atoms comprises a large percentage. In this time, a ratio of oxyethylene group to the total of oxyalkylene of carbon atoms of 3 or more and oxyethylene group is preferably 70 mole% or more, further preferably 90 mole% or more, further preferably 95 mole% or more, and further preferably 100 mole%.

Also, an average addition number of moles of oxyalkylene group is not particularly limited, but an average addition number of moles of oxyalkylene chain is preferably 1 to 300 moles, from the point of improving dispersing performance for inorganic powders, preferably 2 moles or more, more preferably 4 moles or more, further preferably 6 moles or more, further preferably 10 moles or more, further preferably 15 moles or more, and further preferably 20 moles or more. The upper limit of oxyalkylene chain, from the point of production of oxyalkylene chain, is preferably 300 moles, more preferably 250 moles, further preferably 200 moles, and further preferably 150 moles.

The above polymer (P) has a constitutional unit derived from carboxyl group in addition to the constitutional unit derived from polyoxyalkylene chain. The constitutional unit having carboxyl group contains preferably 2 to 90% by weight relative to the total weight of polymer, from the point of adsorption to inorganic powders, preferably 2 % or more by weight, more preferably 5 % or more by weight, further preferably 7.5 % or more by weight, further preferably 10% or more by weight, further preferably 12.5 % or more by weight, further preferably 15 % or more by weight, further preferably 20 % or more by weight, and further preferably 25 % or more by weight. However, when a constitutional unit having a carboxyl group becomes large, an introduced amount of constitutional unit having a dispersing function for inorganic powders becomes small, so that the upper limit is preferably 90% by weight, more preferably 80% by weight, further preferably 60% by weight, further preferably 50% by weight, further preferably 40% by weight, further preferably 35% by weight, and further preferably 30% by weight.

The constitutional unit derived from the above polyoxyalkylene chain preferably comprises a constitutional unit (I) shown in the following chemical formula 5, containing 2 to 98% by weight:

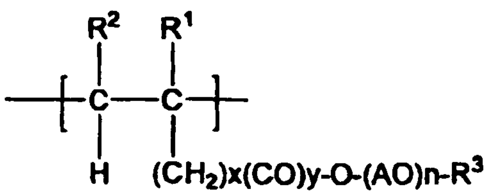

(Chemical formula 5)

Oxyalkylene chain has a function of dispersing inorganic powders such as cement particles due to the steric repulsion effect, preferably contains 2 to 98% by weight, which can sufficiently disperse cement particles. In the chemical formula 5, $R^1$ and $R^2$ each independently represent a hydrogen atom or a methyl group; AO each independently represents

one sort of oxyalkylene groups with carbon atoms of 2 or more, or a mixture of 2 or more sorts thereof, the mixture may be added in a block or random manner; x represents an integer of 0 to 2, y represents 0 or 1, n represents an average addition number of moles of oxyalkylene groups being 1 to 300; and $R^3$ represents a hydrogen atom or a hydrocarbon group with carbon atoms of 1 to 20.

In order to exhibit the effect of dispersion for inorganic powders, the above constitutional unit (I) preferably contains 2% or more by weight in the polymer, more preferably 50% or more by weight, further preferably 60% or more by weight, further preferably 65% or more by weight, and further preferably 70% or more by weight. However, when a content of the above constitutional unit (I) becomes large, a content of constitutional unit (II) having a function of adsorption to inorganic powders like cement becomes small, therefore, no composition with sufficient flowability can be obtained unless a lot of admixtures are added. Thus, the upper limit of content is preferably 98% by weight, more preferably 95% by weight, further preferably 90% by weight, further preferably 85% by weight, and further preferably 80% by weight.

In particular, an oxyalkylene group denoted as AO is preferably an oxyalkylene group with carbon atoms of 2 to 18, from the point of improving dispersing performance for inorganic powders using water as a medium, it is necessary to increase hydrophilicity of oxyalkylene group, it is preferable that an oxyethylene group that is an oxyalkylene group with 2 carbon atoms comprises a large percentage. In this time, a molar ratio of oxyethylene group to the total of oxyalkylene of carbon atoms of 3 or more and oxyethylene group in the constitutional unit (I) is preferably 70 mole% or more, further preferably 80 mole% or more, further preferably 90 mole% or more, and further preferably 100 mole%.

Also, introducing an oxyalkylene group with carbon atoms of 3 or more into an oxyalkylene chain in the constitutional unit (I) provides a certain amount of hydrophobicity, so that a cement particle will have some structure (network), and thereby a state of a concrete produced by using the polymer of the present invention may be improved (for instance, a viscosity and freeze- up of the concrete may be reduced) . However, excessive introduction of an oxyalkylene group with carbon atoms of 3 or more will provide too much hydrophobicity with the polymer obtained, and thereby a performance for dispersing the cement may be lowered. The ratio of an oxyalkylene group with carbon atoms of 3 or more in the constitutional unit (I) is, from the point of view of providing hydrophobicity, preferably 1 mole % or more, more preferably 3 mole % or more, further preferably 5 mole % or more, and, from the point of view of the performance for dispersing cement, preferably 30 mole % or less.

As an oxyalkylene group with carbon atoms of 3 or more, from the points of easy introduction and affinity to cement, an oxyalkylene group with carbon atoms of 3 to 8 is preferable, and an oxyproylene group and oxybutylene group with carbon atoms of 3 to 4 are more preferred.

An average addition number of moles of oxyalkylene chain is preferably 1 to 300 moles, from the point of improving dispersing performance for inorganic powders, preferably 2 moles or more, more preferably 4 moles or more, further preferably 6 moles or more, further preferably 10 moles or more, further preferably 15 moles or more, and further preferably 20 moles or more. The upper limit of oxyalkylene chain, from the point of production of oxyalkylene chain, is preferably 300 moles, more preferably 250 moles, further preferably 200 moles, and further preferably 150 moles.

An end group $R^3$ of oxyalkylene chain is a hydrogen atom or a hydrocarbon group with carbon atoms of 1 to 20, for example, there are listed an alkyl group with carbon atoms of 1 to 20, an aliphatic or cyclic alkyl group, an alkenyl group with carbon atoms of 1 to 20, an alkynyl group with carbon atoms of 1 to 20, aromatic groups having a benzene ring such as a phenyl group with carbon atoms of 6 to 20, an alkylphenyl group and a naphthyl group, hydrophilic one is preferable from the point of dispersing inorganic powders using water as a medium like cement composition, preferable examples include a hydrogen atom or a hydrocarbon group with carbon atoms of 1 to 10 such as alkyl group, alkenyl group, alkynyl group and phenyl group, furthermore, a hydrogen atom or a hydrocarbon group with carbon atoms of 1 to 6 such as alkyl group, alkenyl group, alkynyl group and phenyl group, furthermore, a hydrogen atom or a hydrocarbon group with carbon atoms of 1 to 3 such as alkyl group, alkenyl group and alkynyl group.

The constitutional unit having a site derived from the above carboxyl group comprises a constitutional unit (II) shown in the following chemical formula 6, preferably containing 2 to 90% by weight:

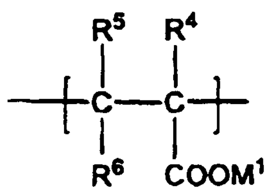

**(Chemical formula 6)**

in the above chemical formula 6, $R^4$, $R^5$ and $R^6$ each independently represent a hydrogen atom or a methyl group, $-(CH_2)_ZCOOM^2$, which may be an anhydride formed with $COOM^1$ or other- $(CH_2)_ZCOOM^2$; z represents an integer of

0 to 2; $M^1$ and $M^2$ each independently represent a hydrogen atom, an alkali metal element, an alkali earth metal element, an ammonium group or an organic amine group.

The above constitutional unit (II) is a part effecting adsorption operation to inorganic powders like cement, from the point of providing a sufficient adsorbability to inorganic powders, preferably contains 2% or more by weight in the polymer, more preferably 5% or more by weight, further preferably 7.5% or more by weight, further preferably 10% or more by weight, further preferably 12.5% or more by weight, further preferably 15% or more by weight, further preferably 20% or more by weight and further preferably 25% or more by weight. However, when a content of the above constitutional unit (II) becomes too large, a content of a constitutional unit (I) having a function of dispersing inorganic powders becomes small, therefore, no composition with sufficient flowability can be obtained unless a lot of admixtures are added. Thus, the upper limit of content of the above constitutional unit (II) is preferably 90% by weight, more preferably 80% by weight, further preferably 60% by weight, further preferably 50% by weight, and further preferably 40% by weight, further preferably 35% by weight and further preferably 30% by weight.

The above polymer (P) is characterized by having the above essential constitutional unit (repeating unit), may further have a constitutional unit (III) derived from monomer (III-M) described below. These constitutional units each may be one sort or, 2 or more sorts.

Regarding the ratio of each constitutional unit composing the above polymer (P) by weight, constitutional unit (I)/constitutional unit (II)/constitutional unit (III) is preferably 2 to 98 wt%/2 to 90 wt%/0 to 50 wt%, more preferably 50 to 95 wt%/5 to 80 wt%/0 to 40 wt%, and further preferably 60 to 90 wt%/7.5 to 60 wt%/0 to 30 wt%.

Monomer for obtaining polymer (P) containing a constitutional unit derived from polyoxyalkylene group

As a monomer providing the above constitutional unit (I), the example is an unsaturated monomer component having a polyoxyalkylene chain(hereinafter referred to as "I-M") containing a monomer shown in the following chemical formula 7:

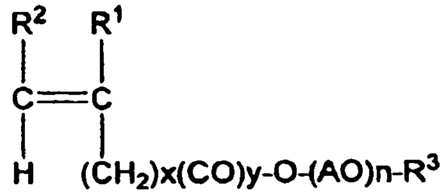

(Chemical formula 7)

wherein $R^1$ and $R^2$ each independently represent a hydrogen atom or a methyl group; AO each independently represents one sort of oxyalkylene groups with carbon atoms of 2 or more, or a mixture of 2 or more sorts thereof, the mixture may be added in a block or random manner; x represents an integer of 0 to 2, y represents 0 or 1, n represents an average addition number of moles of oxyalkylene groups being 1 to 300; and $R^3$ is a hydrogen atom or a hydrocarbon group with carbon atoms of 1 to 20.

Examples of the unsaturated monomer component (I- M) can include alkoxypolyalkylene glycols obtained by adding alkylene oxides with carbon atoms of 2 to 18 to respective saturated aliphatic alcohols with carbon atoms of 1 to 20 such as methanol, ethanol, 1- propanol, 2- propanol, 1- butanol, 2- butanol, 1- pentanol, 1- hexanol, octanol, 2- ethyl- 1- hexanol, nonyl alcohol, lauryl alcohol, acetyl alcohol and stearyl alcohol; unsaturated aliphatic alcohols with carbon atoms of 3 to 20 such as allyl alcohol, methallyl alcohol, crotyl alcohol and oleyl alcohol; cyclic alcohols with carbon atoms of 3 to 20 such as cyclohexanol; aromatic alcohols with carbon atoms of 6 to 20 such as phenol, phenylmethanol (benzyl alcohol), methyl phenol (cresol), p- ethyl phenol, dimethyl phenol (xylenol), nonyl phenol, dodecyl phenol, phenyl phenol and naphthol; esters of polyalkylene glycols obtained by polymerization of alkylene oxide with carbon atoms of 2 to 18; with (meth) acrylic acid and crotonic acid. These unsaturated monomers may be used alone or concomitantly in 2 or more sorts thereof. Of these unsaturated monomers, esters of (meth) acrylic acid with alkoxypolyalkylene glycols are preferred.

Further, there can be listed compounds obtained by adding alkylene oxide of 1 to 300 moles to unsaturated alcohols such as vinyl alcohol, (naeth) allyl alcohol, 3- methy- 3- butene- 1- ol, 3- methyl- 2- butene- l- ol, 2- methyl- 3- butene- 2- ol, 2- methyl- 2- butene- 1- ol and 2- methyl- 3- butene- l- ol. These unsaturated monomers may be used alone or concomitantly in 2 or more sorts thereof. Of these unsaturated monomers, a compound obtained by adding alkylene oxide of 1 to 300 moles to (meth) acryl alcohol or 3- methyl- 3- butene- 1- ol is particularly preferable. Additionally, the above unsaturated esters and unsaturated ethers may be added to alkylene oxides, for example, one or, 2 or more sorts of alkylene oxides selected from alkylene oxides with carbon atoms of 2 to 18 such as ethylene oxide, propylene

oxide, butylenes oxide and styrene oxide. When 2 or more sorts are added, random addition, block addition or alternate addition may be conducted.

A monomer providing the above constitutional unit (II) is an unsaturated monomer component (hereinafter referred to as "II- M") containing a monomer, for example, shown in the chemical formula 8:

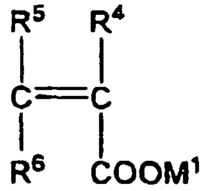

(Chemical formula 8)

wherein $R^4$, $R^5$ and $R^6$ each independently represent a hydrogen atom or a methyl group, $-(CH_2)_ZCOOM^2$, which may be an anhydride formed with $COOM^1$ or other- $(CH_2)_ZCOOM^2$; z represents an integer of 0 to 2; $M^1$ and $M^2$ each independently represent a hydrogen atom, an alkali metal element, an alkali earth metal element, an ammonium group or an organic amine group, a hydrocarbon group with carbon atoms of 1 to 20 or a silyl group having a hydrocarbon group with carbon atoms of 3 to 18.

Examples of the unsaturated monomer designated as II-M include monocarboxylic acids such as (meth)acrylic acid and crotonic acid; dicarboxylic acid based monomers such as maleic acid, itaconic acid and fumaric acid; and their anhydrides or salts such as monovalent metal, divalent metal, trivalent metal, ammonium or organic amino acid salt; esters of hydrocarbon group with carbon atoms of 1 to 20 of monocarboxylic acid based monomers such as (meth) acrylic acid and crotonic acid; silyl esters having a hydrocarbon group with carbon atoms of 3 to 18; mono or diesters of hydrocarbon group of carbon atoms of 1 to 20 of dicarboxylic acid based monomers such as maleic acid, itaconic acid and fumaric acid; mono or disily esters having a hydrocarbon group with carbon atoms of 3 to 18. Of these unsaturated monomers, the following compound are preferable from the polymerizing point: acrylic acid, methacrylic acid maleic acid and maleic anhydride, in particular, acrylic acid and methacrylic acid, and their salts, alkyl esters with carbon atoms of 1 to 6 of acrylic acid or methacrylic acid, such as methyl ester, ethyl ester, propyl ester and butyl ester; silyl esters having hydrocarbon group with carbon atoms of 3 to 16 such as trimethylsilyl ester, t-butyl-climethylsilyl ester and t-butyl-diphenylsilyl ester; mono or dialkyl esters with carbon atoms of 1 to 6 of maleic acid, such as methyl ester, ethyl ester, propyl ester and butyl ester; mono or disilyl esters having a hydrocarbon group with carbon atoms of 3 to 16, such as trimethylsilyl ester, t-butyl-dimethylsilyl ester and t-butyl-diphenylsilyl ester. When alkyl esters or silyl esters are used, if required, esters may be hydrolyzed to yield carboxyl groups.

Also, these monomers may be concomitantly used in 2 or more sorts thereof.

It is also preferable to use an additional unsaturated monomer (III- M) that is deferent from the above I- M and II- M being capable of copolymerizing with I- M and II- M. Examples of the unsaturated monomer (III- M) can include monoesters and diesters of unsaturated dicarboxylic acids such as maleic acid, fumaric acid, itaconic acid and citraconic acid with alkyl alcohols with carbon atoms of 1 to 20, glycols with carbon atoms of 2 to 18 or polyalkylene glycols with addition number of moles of 2 to 300 of these glycols, and alkoxymonoalkylene oxides with alkylene oxides with carbon atoms of 1 to 18 to alkylalcoholes with carbon atoms of 1 to 20 or alkoxypolyalkylene oxides with addition number of moles of 2 to 300 of alkylene oxides with corbon atoms of 2 to 18 to alkyl alcohols with carbon atoms of 1 to 20; or monoamides and diamides of these acids with alkyl amines with carbon atoms of 1 to 20 and one- end amination compound of glycols with carbon atoms of 2 to 18, or one- end amination compound of polyalkylene glycols with addition number of moles of 2 to 300 of these glycols: esters of unsaturated monocarboxylic acids such as (meth) acrylic acid and crotonic acid with alkyl alcohols with carbon atoms of 1 to 20, glycols with carbon atoms of 2 to 18 or polyalkylene glycols with addition number of moles of 2 to 300 of these glycols and alkoxymonoalkylene oxides with alkylene oxides with carbon atoms of 1 to 18 to alkylalcoholes with carbon atoms of 1 to 20 or alkoxypolyalkylene oxides with addition number of moles of 2 to 300 of alkylene oxides with corbon atoms of 2 to 18 to alkyl alcohols with carbon atoms of 1 to 20; or amids of these acids with alkylamines with carbon atoms of 1 to 20 and one- end amination compound of glycols with carbon atoms of 2 to 18 or one- end amination compound of polyalkylene glycols with addition number of moles of 2 to 300 of these glycols: unsaturated sulfonic acids such as sulfoethyl (meth) acrylate, 2- methylpropane sulfonic acid (meth) acrylamide and styrene sulfonic acid, and their monovalent metal salt, divalent metal salt, ammonium salt and organic amine salt: unsaturated amides such as (meth) acrylamide and (meth) acrylalkylamide: unsaturated amino compounds such as dimethylaminoethtyl (meth) acrylate: vinyl esters such as vinyl acetate and vinyl propionate: vinyl ethers; alkyl vinyl ethers with carbon atoms of 3 to 20 such as methyl vinyl ether, ethyl vinyl ether, propyl vinyl ether,

butyl vinyl ether: and aromatic vinyl such as styrene. These unsaturated monomers may be used alone or concomitantly used in 2 or more sorts thereof.

To obtain a polymer by copolymerization of unsaturated monomer (I- M), unsaturated monomer (II- M) and unsaturated monomer (III- M), regarding a ratio of these unsaturated monomers used relative to the total of 100 in weight %, unsaturated monomer (I- M) / unsaturated monomer (n- M) / unsaturated monomer (III- M) is preferably 2 to 98 wt%/ 2 to 90 wt%/ 0 to 50 wt%, more preferably 50 to 95 wt%/ 5 to 80 wt%/ 0 to 40 wt%, and further preferably 60 to 90 wt%/ 7.5 to 60 wt%/ 0 to 30 wt%.

The weight-average molecular weight (Mw) of the polymer (P) may be suitably adjusted for the purpose thereof. For example, when the polymer (P) is used as a dispersant for inorganic materials, the Mw of the polymer (P) may be adjusted to the appropriate value according to the type and the particle size of the materials to be dispersed. When the polymer (P) is used as a cement dispersant, in view of adsorbing the polymer (P) with the cement particles, and thereby sufficiently dispersing the cement particles, the polymer (P) has the Mw value of preferably 1,000 or more, more preferably 5,000 or more, further preferably 10, 000 or more, further preferably 15,000 or more, further preferably 20,000 or more, further preferably 25,000 or more. In view of preventing coagulation of the cement particles, the polymer (P) has the Mw value of preferably 80,000 or less, further preferably 60,000 or less, further preferably 40,000 or less. It should be noted that the Mw values above are obtained when measured in GPC condition described in this specification.

Production of polymer (P) containing a constitutional unit derived from polyoxyalkylene chain.

The polymer (P) containing a constitutional unit derived from polyoxyalkylene chain of the present invention has a given PD value described above, and particularly is characterized by a narrow molecular weight distribution. As a production method of the polymer having a given PD value described above, for example, the following manners can be listed:

(1) fraction methods by using gel permeation chromatography (GPC) and filtration film, fractionation by solubility difference or dialysis method against polymers having a constitutional unit derived from polyoxyalkylene chain obtained by a well-known method.

(2) living polymerization method of monomer containing an unsaturated monomer having a polyoxyalkylene chain, of the living polymerizations, living radical polymerization is preferable. One feature of living radical polymerization method will be described below.

There are known a lot of techniques in a living radical polymerization method. For example, there are a method using a nitrogen based oxide like TEMPO (2, 2, 6, 6, -tetramethyl- 1- piperidinyloxy), a method using transition metal catalyst, sometimes called ATRP (Atomic Transfer Radical Polymerization) method, and RAFT (Reversible Addition-Fragmentation chain Transfer) method.

Although there has been a method using a transition metal catalyst as one feature of living radical polymerization method, by using a new catalyst system, there is a method for polymerizing highly polarized monomers particularly such as (meth)acrylic based monomer and a monomer having a polyalkylene glycol side chain in bulk or a highly polarized solvent. The new catalyst system is a mixture of an organometallic compound shown in the following chemical formula 1:

(M) a (L) b (X) c (Chemical formula 1)

wherein M represents an element belonging to the fourth period and L is represented by the following chemical formula 2:

(AI) d (AO) e (AS) f (Chemical formula 2)

wherein AI represents alkyleneimine, AO represents alkylene oxide and AS represents alkylene sulfide; X represents halogen; and a, b, c d, e and f each independently represent number of not less than 0.

and an organic halogen compound shown in the following chemical formula 9:

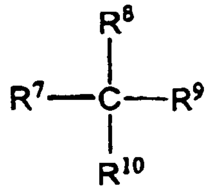

(Chemical formula 9)

wherein $R^7$, $R^8$, $R^9$ and $R^{10}$ each independently represent a hydrogen atom, a hydrocarbon group or a halogen atom, and a hydrocarbon group may contain 1 or more halogen atoms or hetero atoms.

The above catalyst system is composed of one sort or, 2 or more sorts of compounds shown in the above chemical formula 1 and one sort or, 2 or more sorts of compounds shown in the above chemical formula 2.

In the above chemical formula 1, generally as L, heterocyclic and aromatic type compounds such as bipyridine type and triphenylphosphine type compounds are used, but there is a limitation of solubility to monomer on solvent, so that there has been a drawback that polymerization does not proceed particularly in the case of using highly polarized solvents and highly polarized monomers. On the other hand, a compound shown in the above chemical formula 1 containing a compound shown in the above chemical formula 2 improves stability and solubility even in highly polarized solvents because of containing a lot of high electronegativity atoms of nitrogen, oxygen and sulfur as comparing with carbon atom, also, becomes higher affinity to highly polarized monomers such as (meth)acryl based monomer and a monomer having a polyalkylene glycol side chain. As a result, living radical polymerization of highly polarized monomer can be performed even in a highly polarized solvent, so that a polymer with narrow molecular weight distribution was able to be obtained in a high yield. Also, resulting from living radical polymerization being different from conventional radical polymerizations, it became possible to synthesize a block polymer as well as a random polymer.

The compounds shown in the above chemical formula 1 may be used alone or concomitantly in 2 or more sorts thereof. In order to increase polymerization rate, the compounds shown in the above chemical formula 1 preferably contains 2 or more sorts of different M, more preferably contains 2 sorts of different M in number of positive charge. In this case, when numbers of positive charge are denoted by g, h (g<h), a molar ratio of $M^{h+}$ to $M^{g+}$ ($M^{h+}/M^{g+}$) is not limited, but from the point of view of molecular weight distribution, preferably 0.1 mole % or more, more preferably 1 mole % or more, further preferably 5 mole % or more, further preferably 10 mole % or more, further preferably 20 mole % or more, and from the point of view of polymerization rate, preferably 1000 mole % or less, more preferably 200 mole % or less, further preferably 100 mole % or less, further preferably 80 mole % or less, further preferably 50 mole % or less.

Also, a molar ratio of total of M to monomer is, depending on molecular weight of polymer required, from the point of view of polymerization rate, preferably 0.01 mole % or more, more preferably 0.1 mole % or more, further preferably 0.5 mole % or more, further preferably 1 mole % or more, and from the point of view of molecular weight distribution, preferably 1000 mole % or less, more preferably 100 mole % or less, further preferably 10 mole % or less, further preferably 5 mole % or less.

M may be a sort of or a combination of more than two sorts of different electric charges and/or different elements, but preferably transition elements in the forth period, more preferably manganese, iron, cobalt, nickel, copper are used.

The organic halogen compound shown in chemical formula 9 must contain at least one halogen atom. Also, the organic halogen compounds shown in chemical formula 9 may be used alone or concomitantly in 2 or more sorts thereof. Examples of the organic halogen compound shown in chemical formula 9 can include halogenated hydrocarbon compounds such as tetrachloromethane, trichloromethane, dichloromethane, monochloroethane and trichlorophenylmethane, dichlorodiphenylmethane; $\alpha$- halogenocarbonyl compounds such as 2, 2, 2- trichloroacetone and 2, 2- dichloroacetophenone! and $\alpha$- halogenocarboxylic acid ester such as methyl 2, 2, 2- trichloroacetate, methyl 2, 2- dichloroacetate, methyl 2- chloropropanoate, ethyl 2- bromo- 2- methylpropanoate, ethyl 2- iodo- 2- methylpropanoate, ethyl 2- bromo- propanoate, ethyl 2- iodo- propanoae, dimethy 2- chloro- 2, 4, 4- trimethyl glutarate, 1, 2- bis (2'- bromo- 2'- methylpropionyloxy) ethane, 1, 2- bis (2'- bromopropionyloxy) ethane and 2- (2'- bromo- 2'- methylpropionyloxy) ethyl alcohol. These organic halogen compounds may be used alone or concomitantly in 2 or more sorts thereof. Of these organic halogen compounds, $\alpha$- halogenocarbonyl compounds and $\alpha$- halogenocarboxylic acid ester are preferable, specifically, 2, 2- dichloroacetophenone, dimethyl 2- chloro- 2, 4, 4- trimethyl glutarate, ethyl 2- bromo- 2- methylpropanoate and ethyl 2- iodo- 2- methylpropanoate are preferable.

A molar ratio of the organic halogen compound shown in the above chemical formula 9 to monomer is, depending on molecular weight of the monomer required, from the point of view of polymerization rate, preferably 0.01 mole % or more, more preferably 0.1 mole % or more, further preferably 0.5 mole % or more, further preferably 1 mole % or more, and from the point of view of molecular weight distribution, preferably 1000 mole % or less, more preferably 100 mole % or less, further preferably 10 mole % or less, further preferably 5 mole % or less. A molar ratio of formulation of

transition elements contained in the compound shown in the above chemical formula 1 to the organic halogen compound shown in the above chemical formula 9 is not particularly limited, but when the amount of transition elements in the above chemical formula 1 is too small, polymerization rate tends to be lowered, accordingly, the ratio is preferably 1 mole % or more, more preferably 5 mole % or more, further preferably 10 mole % or more. On the other hand, when the amount is too large, side reaction tends to occur and molecular weight distribution of the polymer obtained tends to widen, therefore, the ratio is preferably 1000 mole % or less, more preferably 200 mole % or less, further preferably 100 mole % or less.

The compounds shown in the above chemical formula 2, that is, (co)polymer obtained by (co)polymerizing alkyleneimine, alkylene oxide, and alkylene sulfide, may be used alone or concomitantly in 2 or more sorts thereof. Also, AI, AO, AS may be used alone or concomitantly in 2 or more sorts thereof, respectively.

In the compounds shown in the above chemical formula 2, d, e, and f represent a repeating unit of AI, AO, and AS, respectively. From the point of view of stabilization of transition metal elements, d is preferably 1 or more, more preferably 2 or more, further preferably 4 or more, further preferably 6 or more, further preferably 10 or more, further preferably 15 or more, and from the point of view of producing, preferably 200 or less, more preferably 100 or less, further preferably 50 or less, further preferably 20 or less.

From the point of view of solubility of the compound shown in the above chemical formula 1, e is preferably 1 or more, more preferably 2 or more, further preferably 3 or more, further preferably 7 or more, further preferably 10 or more, and from the point of view of producing, preferably 500 or less, more preferably 300 or less, further preferably 200 or less, further preferably 100 or less, further preferably 50 or less. From the point of view of stabilization of transition metal elements, f is preferably 1 or more, more preferably 2 or more, further preferably 4 or more, further preferably 6 or more, further preferably 10 or more, further preferably 15 or more, and from the point of view of producing, preferably 200 or less, more preferably 100 or less, further preferably 50 or less, further preferably 20 or less.

For compatibility between stabilization and solubility of the compounds shown in the above chemical formula 1, the compounds shown in the above chemical formula 2 preferably contains 2 or more sorts of AI, AO and AS, and preferably both AI and AO, and further preferably consists of only AI and AO. Bonding order of AI, AO and AS may be of a random structure or block structure. A block structure is preferable to reduce side reaction. A structure in which AO is added to active hydrogen of poly-AI is excellent in stability, solubility, and reactivity for the compounds shown in the above chemical formula 1, thereby more preferable.

For AI, ethylenimine is preferable from the point of view of reactivity and stabilization of transition metal elements. For AO, from the point of view of reactivity and solubility, alkylene oxide with carbon atoms of 18 or less is preferable, more preferably alkylene oxide with carbon atoms of 8 or less, further preferably alkylene oxide with carbon atoms of 4 or less, further preferably alkylene oxide with carbon atoms of 3 or less, further preferably alkylene oxide with carbon atoms of 2 or less. For AS, ethylene sulfide is preferable from the point of view of reactivity and stabilization of transition metal elements.

Organotellurium compound and ditelluride compound

As another manner of living radical polymerization, there is a method of polymerization using a radical polymerization initiator and, an organotellurium compound shown in the following chemical formula 3:

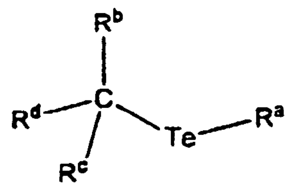

(Chemical formula 3)

wherein $R^a$ represents an alkyl group with carbon atoms of 1 to 8, an aryl group, a substituted aryl group or an aromatic heterocyclic group; $R^b$ and $R^c$ each independently represent a hydrogen atom or an alkyl group with carbon atoms of 1 to 8, $R^d$ represents an aryl group, a substituted aryl group, an aromatic heterocyclic group, an acyl group, an oxycarbonyl group or a cyano group; and/or, a ditelluride compound shown in the following chemical formula 4:

$R^fTe - TeR^g$ (Chemical formula 4)

wherein $R^f$ and $R^g$ each independently represent an alkyl group with carbon atoms of 1 to 8, an aryl group, a substituted

aryl group or an aromatic heterocyclic group.

The organotellurium compound shown in the above chemical formula 3 and ditelluride compound shown in the above chemical formula 4 may be used alone or concomitantly in 2 or more sorts thereof.

Examples of the alkyl group with carbon atoms of 1 to 8 denoted as $R^a$ in the above chemical formula 3, there are listed a liner, branched or cyclic alkyl group with carbon atoms of 1 to 8 such as a methyl group, ethyl group, n-propyl group, isopropyl group, cyclopropyl group, n-butyl group, sec-butyl group, tert-butyl group, cyclobutyl group, n-pentyl group, n-hexyl group, n-heptyl group and n-octyl group. Of these alkyl groups, a linear or branched alkyl group with carbon atoms of 1 to 4 is preferable, a methyl group, ethyl group and n-butyl are more preferable. Examples of the aryl group denoted as $R^a$ are a phenyl group and naphthyl group. Examples of the substituted aryl group denoted as $R^a$ are a phenyl group having a substituent group and naphthyl group having a substituent group. Examples of the aromatic heterocyclic group denoted as $R^a$ are a pyridyl group, pyrrole group, furil group and thienyl group. As a substituent of substituted aryl group, the example includes a halogen atom, a hydroxyl group, alkoxy group, amino group, nitro group, cyano group, carbonyl containing group denoted as $-COR^h$ wherein $R^h$ represents a alkyl group with carbon atoms of 1 to 8, an aryl group, an alkoxy group or aryloxy group with carbon atoms of 1 to 8, a sulfonyl group and a trifluoromethyl group. As a preferable aryl group, for example, a phenyl group and a trifluoromethy substituted phenyl group are listed. Also, as for these substituent groups, one or two substitutes are preferable and para- or ortho- position is preferred.

As an alkyl group with carbon atoms of 1 to 8 denoted as $R^b$ or $R^c$ in the above chemical formula 3, for example, there are listed a liner, branched or cyclic alkyl group with carbon atoms of 1 to 8 such as a methyl group, ethyl group, n-propyl group, isopropyl group, cyclopropyl group, n-butyl group, sec-butyl group, tert-butyl group, cyclobutyl group, n-pentyl group, n-hexyl group, n-heptyl group and n-octyl group. Of these alkyl groups, a linear or branched alkyl group with carbon atoms of 1 to 4 is preferable, a methyl group, ethyl group and n-butyl group are more preferable.

In the above chemical formula 3, examples of the aryl group, substituted aryl group and aromatic heterocyclic group denoted as $R^d$ are the above substituent groups listed in the aryl group, substituted aryl group and aromatic heterocyclic group denoted as $R^a$. Examples of the acyl group denoted as $R^d$ are a formyl group, acetyl group and benzoyl group. As an oxycarbonyl group denoted as $R^d$, a group denoted as $-COOR^i$ wherein $R^i$ represents preferably a hydrogen atom, a alkyl group with carbon atoms of 1 to 8 or an aryl group is preferable, there are preferably listed a carboxyl group, methoxycarbonyl group, ethoxycarbonyl group, propoxycarbony group, n-butoxycarbonyl group, sec-butoxycarbonyl group, tert-butoxycarbonyl group, n-pentoxycarbonyl group and phenoxycarabony group and the like. As a preferable oxycarbonyl group, for example, a methoxycarbonyl group and ethoxycarbonyl group are listed.

Preferable groups denoted as $R^d$ are an aryl group, substituted aryl group, oxycarbony group, or cyano group. An example of preferable aryl group is a phenyl group. Examples of preferable substituted aryl group are a halogen atom substituted phenyl group and a trifluoromethyl substituted phenyl group. Also, in the case that these substituent groups are halogen atoms, 1 to 5 substitutes are preferred. In the case of alkoxy group or trifluoromethyl group, 1 or 2 substitutes are preferable, in the case of one substitute, para- or ortho-position is preferable, and in the case of 2 substitutes, meta-position is preferred. Preferable examples of oxycarbonyl group are a methoxycarbonyl group and an ethoxycarbonyl group.

A preferable organotellurium compound shown in the above chemical formula 3 is a compound that $R^a$ represent an alkyl group with carbon atoms of 1 to 4, $R^b$ and $R^c$ represent a hydrogen atom or an alkyl group with carbon atoms of 1 to 4 and $R^d$ represents an aryl group, a substituted aryl group and an oxycarbonyl group. A particularly preferable organotellurium compound is a compound that $R^a$ represent an alkyl group with carbon atoms of 1 to 4, $R^b$ and $R^c$ represent a hydrogen atom or an alkyl group with carbon atoms of 1 to 4 and $R^d$ represents a phenyl group, a substituted phenyl group, a methoxycarbonyl group or an ethoxycarbonyl group.

Specific examples of the organotellurium compound shown in the above chemical formula 3 include (methyltellanyl- methyl) benzene, (1- methyltellanyl- ethyl) benzene, (2- methyltellanyl- propyl) benzene, 1- chloro- 4- (methyltellanyl- methyl) benzene, 1- hydroxy- 4- (methyltellanyl- methyl) benzene, 1- methoxy- 4- (methylteRanyl- methyl) benzene, 1- amino- 4- (methytellanyl- methyl) benzene, 1- nitro- 4- (methyltellanyl- methyl) benzene, 1- cyano- 4- (methyltellanyl- methyl) benzene, 1- methylcarbonyl- 4- (methyltellanyl- methyl) benzene, 1- phenylcarbonyl- 4- (methyltellanyl- methyl) benzene, 1- methoxycarbonyl- 4- (methyltellanyl- methyl) benzene, 1- phenoxycarbonyl- 4- (methyltellanyl- methyl) benzene, 1- sulfonyl- 4- (methyltellanyl- methyl) benzene, 1- triffuoromethyl- 4- (methyltellanyl- methyl) benzene, 1- chloro- 4- (1- methyltellanyl- ethyl) benzene, 1- hydroxy- 4- (1- methyltellanyl- ethyl) benzene, 1- inethoxy-4- (1- methyltellanyl- ethyl) benzene, 1- amino- 4- (1- methyltellanyl- ethyl) benzene, 1- nitro- 4- (1- methyltellanyl- ethyl) benzene, 1- cyano- 4- (1- methyltellanyl- ethyl) benzene, 1- methylcarbonyl- 4- (1- methyltellanyl- ethyl) benzene, 1-phenylcarbonyl- 4- (1- methyltellanyl- ethyl) benzene, 1- methoxycarbonyl- 4- (1- methyltellanyl- ethyl) benzene, 1-phenoxycazbonyl- 4- (1- methyltellanyl- ethyl) benzene, 1- sulfonyl- 4- (1- methyltellanyl- ethyl) benzene, 1- trifluoromethyl- 4- (1- methyltellanyl- ethyl) benzene, 1- (1- methyltellanyl- ethyl)- 3, 5- bis- trifluoromethylbenzene, 1, 2, 3, 4, 5-pentafluoro- 6- (1- methytellanyl- ethyl) benzene, 1- chloro- 4- (2- methyltellanyl- propyl) benzene, 1- hydroxy- 4- (2-methyltellanyl- propyl) benzene, 1- methoxy- 4- (2- methyltellanyl- propyl) benzene, 1- amino- 4- (2- methyltellanyl-propyl) benzene, 1- nitro- 4- (2- methyltellanyl- propyl) benzene, 1- cyano- 4- (2- methyltellanyl- propyl) benzene, 1-methylcarbonyl- 4- (2- methyltellanyl- propyl) benzene, 1- phenylcarbonyl- 4- (2- methyltellanyl- propyl) benzene, 1-methoxycarbonyl- 4- (2- methyltellanyl- propyl) benzene, 1- phenoxycarbonyl- 4- (2- methyltellanyl- propyl) benzene, 1-sulfonyl- 4- (2- methyltellanyl- propyl) benzene, 1- trifluoromethyl- 4- (2- methyltellanyl- propyl) benzene, 2- (methyltellanyl- methyl) pyridine, 2- (1- methyltellanyl- ethyl) pyridine, 2- (2- methyltellanyl- propyl) pyridine, 2- methyl- 2- methyltellanyl- propanal, 3- methyl- 3- naethyltellanyl- 2- butanone, methyl 2- methyltellanylethnoate, methyl 2- methyltellanylpropionate, methyl 2- methyltellanyl- 2- methylpropionate, ethyl 2- methyltellanylethnoate, ethyl 2- methyltellanylpropionate, ethyl 2- methyltellanyl- 2- methylpropionate, ethyl 2- (n- butylteHanyl)- 2- methylpropionate, 2- methyltellanyl acetonitrile, 2- methyltellanyl propionitrile, 2- methyl- 2- methyltellanylpropionitrile, (phenyltellanyl- methyl) benzene, (1-phenyltellanyl- ethyl) benzene and (2- phenyltellanyl- propyl) benzene.

Also, the above organotellurium compounds include modified organotellurium compounds in such way that methyltellanyl, 1- methyltellanyl or 2- methyltellanyl part each is changed with ethyltellanyl, 1- ethyltellanyl or 2- ethyltellanyl, butyltellanyl, 1- butyltellanyl or 2- butyltellanyl. Of these organotellurium compounds, preferable ones are (methylteHanyl- methyl) benzene, (1- methyltellanyl- ethyl) benzene, (2- methyltellanyl- propyl) benzene, 1- chloro- 4- (1-methyltellanyl- ethyl) benzene, 1- trifluoromethyl- 4- (1- methyltellanyl- ethyl) benzene, methyl 2- methyltellanyl- 2-methylpropionate, ethyl 2- methyltellanyl- 2- methylpropionate, ethyl 2- (n- butyltellanyl)- 2- methylpropionate, ethyl 2-methyltellanyl- 2- methylpropionate, 1- (1- methyltellanyl- ethyl)- 3, 5- bis- trifluoromethylbenzene, 1, 2, 3, 4, 5- pentafluoro-6- (1- methytellanyl- ethyl) benzene, 2- methyltellanylpropionitrile, 2- methyl- 2- methyltellanylpropionitrile, (ethyltellanyl-methyl) benzene, (1- ethyltellanyl- ethyl) benzene, (2- ethyltellanyl- propyl) benzene, methyl 2- ethyltellanyl- 2- methylpropionate, ethyl 2- ethyltellanyl- 2- methylpropionate, 2- ethyltellanylpropionitrile, 2- methyl- 2- ethyltellanylpropionitrile, (n- butyltellanyl- methyl) benzene, (1- n- butyltellanyl- ethyl) benzene, (2- n- butyltellanyl- propyl) benzene, methyl 2- n-butyltellanyl- 2- methylpropoinate, ethyl 2- n- butyltellanyl- 2- methylpropionate, 2- n- butyltellanylpropionitrile and 2-methyl- 2- n- butyltellanylpropionitrile.

As an alkyl group with carbon atoms of 1 to 8 denoted as $R^f$ or $R^g$ in the above chemical formula 4, for example there are listed a liner, branched or cyclic alkyl group with carbon atoms of 1 to 8 such as a methyl group, ethyl group, n-propyl group, isopropyl group, cyclopropyl group, n-butyl group, see-butyl group, tert-butyl group, cyclobutyl group, n-pentyl group, n-hexyl group, n-heptyl group and n-octyl group. Preferable alkyl groups are a linear or branched alkyl group with carbon atoms of 1 to 4, a methyl group, ethyl group or butyl group is more preferable. Examples of the aryl group denoted as $R^f$ or $R^g$ are a phenyl group and naphthyl group. Examples of the substituted aryl group denoted as $R^f$ or $R^g$ are a phenyl group having a substituent group and naphthyl group having a substituent group. Examples of the aromatic heterocyclic group denoted as $R^f$ or $R^g$ are a pyridyl group, furil group and thienyl group. As a substituent of substituted aryl group, the example includes a halogen atom, a hydroxyl group, alkoxy group, amino group, nitro group, cyano group, carbonyl containing group denoted as $-COR^j$ wherein $R^j$ represents an alkyl group with carbon atoms of 1 to 8, an aryl group, an alkoxy group or aryloxy group with carbon atoms of 1 to 8, a sulfonyl group and a trifluoromethyl group. As a preferable aryl group, for example, a phenyl group and a trifluoromethyl substituted phenyl group are listed. Also, as for these substituent groups, one or two substitutes are preferable and para- or ortho-position is preferred.

As a specific example of the ditelluride compound shown in the above chemical formula 4, for example, there are listed dimethyl ditelluride, diethyl ditelluride, di- n- propyl ditelluride, diisopropyl ditelluride, dicyclopropyl ditelluride, di- n- butyl ditelluride, di- sec- butyl ditelluride, di- tert- butyl ditelluride, dicyclobutyl ditelluride, diphenyl ditelluride, bis-(p- methoxyphenyl) ditelluride, bis- (p- aminophenyl) ditelluride, bis- (p- nitrophenyl) ditelluride, bis- (p- cyanophenyl) ditelluride, bis- (p- sulfonylphenyl) ditelluride, dinaphthyl ditelluride and dipyridyl ditelluride.

Radical polymerization initiator

On the occasion of living polymerization using an oraganotellurium compound shown in the above chemical formula 3 and/or ditelluride compound shown in the above chemical formula 4, a radical polymerization initiator is used. The radical polymerization initiator is not particularly limited as long as it is a radical polymerization initiator used in an ordinary radical polymerization, for example an azo compound shown in the following chemical formula 10:

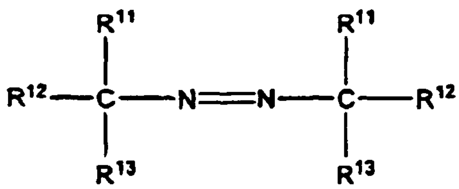

(Chemical formula 10)

wherein $R^{11}$ and $R^{12}$ each independently represent an alkyl group with carbon atoms of 1 to 10, an alkyl group substituted by a carboxyl group having carbon atoms of 1 to 4, and a phenyl group that may have a substituent, $R^{11}$ and $R^{12}$ bonding the same carbon atom may form an aliphatic ring, $R^{13}$ represents a cyano group, an acetoxy group, a carbamoyl group, and a (C1-C4 alkoxy)carbonyl group.

As an alkyl group with carbon atoms of 1 to 10 denoted as $R^{11}$ and $R^{12}$ in the above chemical formula 10, for example, there are listed a methyl group, ethyl group, propyl group, isopropyl group, butyl group, pentyl group, hexyl group, heptyl group, octyl group, nonyl group and decyl group. As the alkyl group with carbon atoms of 1 to 4 substituted by a carboxyl group denoted as $R^{11}$ and $R^{12}$, for example, there are listed a methyl group, ethyl group, propyl group, isopropyl group and butyl group. As an aliphatic ring formed by $R^{11}$ and $R^{12}$ bonding the same carbon atom, for example, there are listed a cyclopentyl group, cyclohexyl group, cycloheptyl group and cyclooctyl group. Additionally, a phenyl group may be substituted with substituents such as hydroxyl group, methyl group, ethyl group, methoxy group, ethoxy group, nitro group, amino group, acetyl group and acetylamino group. As a (C1-C4 alkoxy)carbonyl group denoted as $R^{13}$, for example, there are listed a methoxycarbonyl group, ethoxycarbonyl group, propoxycarbonyl group, isopropoxycarbonyl group and butoxycarbonyl group.

As a specific example of the azo compound shown in the chemical formula 10, for example, there are listed 2, 2'- azobis (isobutyxo nitrile) (AIBN), 2, 2'- azobis (2- methylbutyronitxdle) (AMBN), 2, 2'- azobis (2, 4- dimethylvaleronitrile) (ADVN), 1, 1'- azobis (1- cyclohexanecarbonitrile) (ACHN), dimethyl- 2, 2'- azobisisobutylate (MMB), 4, 4'- azobis (4- cyanovalerianic acid) (ACVA), 1, 1'- azobis (1- acetoxy- 1- phenylethane), 2, 2'- azobis (2- methylbutylamide) and methyl 1, 1'- azobis (1- cyclohexane carboxylate) .

Production of polymer using organotellurium compound and/or ditelluride compound

A polymer of the present invention is produced using an organotellurium compound shown in the chemical formula 3 and/or a ditelluride compound shown in the chemical formula 4 and a radical polymerization catalyst as follows, for example.

First, in a reactor whose atmosphere was replaced with inert gas, an organotellurium compound shown in the chemical formula 3 and/or a ditelluride compound shown in the chemical formula 4 are mixed with a radical polymerization initiator and stirred. The reaction temperature and reaction time may be suitably adjusted, are not particularly limited, but ordinarily in a temperature of 40 to 150°C for 0.5 to 100 hours, preferably in a temperature of 60 to 120°C for 1 to 30 hours. In this case, the reaction is ordinarily conducted in ambient pressure, may be conducted under pressure or reduced pressure. Examples of inert gas include nitrogen, argon and helium. Of the inert gases, argon and nitrogen are preferable, nitrogen is particularly preferred.

Regarding the use-amount of organotellurium compound shown in the chemical formula 3 and/or ditelluride compound shown in the chemical formula 4 and radical polymerization initiator, ordinarily, a ratio of organotellurium compound shown in the chemical formula 3 and/or ditelluride compound shown in the chemical formula 4 to a radical polymerization initiator of 1 mole is 0.01 to 100 moles, preferably 0.1 to 10 moles, and more preferably 0.1 to 5 moles.

The reaction is ordinarily conducted without solvent, but an organic solvent generally used in radical polymerization or a water based solvent may be used. Examples of the usable organic solvent include benzene, toluene, N, N-dimethylformamide (DMF), dimethylsulfoxide (DMSO), acetone, chloroform, carbon tetrachloride, tetrahydrofuran (THF), ethyl acetate and trifluoromethylbenzene. Also, examples of water based solvent include water, methanol, ethanol, isopropanol, n- butanol, ethyl cellosolve, butyl cellosolve and 1- metoxy- 2- propanol. The amount of solvent used may be suitably adjusted, is not particularly limited, for example, relative to unsaturated monomer of 1g, is 0.01 to 50 mL, preferably 0.05 to 5 mL.

Next, an unsaturated monomer is added to the above mixture and stirred. The reaction temperature and reaction time may be suitably adjusted according to a molecular weight or molecular weight distribution of living radical polymer to be obtained, are not particularly limited, but ordinarily in a temperature of 40 to 150°C for 0.5 to 100 hours, preferably in a temperature of 60 to 120°C for 1 to 30 hours. In this case, the reaction is ordinarily conducted in ambient pressure, may be conducted under pressure or reduced pressure.

The amount of unsaturated monomer used may be suitably adjusted according to a molecular weight or molecular weight distribution of living radical polymer to be obtained, are not particularly limited, but ordinarily, relative to a radical polymerization initiator of 1 mole, 5 to 10,000 moles, and preferably 50 to 5000 moles.

After completion of reaction, by conventional methods, solvents and residual unsaturated monomers are removed in reduced pressure to yield a target polymer, or the target polymer is separated by reprecipitation treatment using a solvent not dissolving the target polymer. Treatment after reaction may employ any treating method as long as it has no disadvantage for the target polymer.

The above living radical polymerization can be conducted in a very mild condition to provide a precise molecular weight and molecular weight distribution. Molecular weight of living radical polymer obtained by the present invention can be adjusted by the reaction time and amount of tellurium compound, for example, a living radical polymer can be

obtained with a number-averaged molecular weight of 500 to 1,000,000, preferably 1000 to 300,000, more preferably 3000 to 150,000. Also, the molecular weight distribution (Mw/Mn) of polymer obtained by the present invention can be controlled preferably in a range of 1.01 to 1.60, more preferably 1.05 to 1.50, further preferably 1.05 to 1.40, further preferably 1.05 to 1.30, and further preferably 1.05 to 1.20.

Regarding the end group of living radical polymer obtained by the present invention, it has been confirmed that there are an alkyl group, aryl group, substituted aryl group, aromatic heterocyclic group, oxycarbonyl group or cyano group derived from organotellurium compounds, and also a growth end is highly active tellurium, accordingly, by using an organotellurium compound in living radical polymerization, it is easy for end groups to be changed into other functional groups as compared with a living radical polymer obtained by a conventional living radical polymerization. Thereby, living radical polymers obtained by the present invention can be used as macro living radical polymerization initiator (macro initiator).

Namely, using a macro living radical polymerization initiator of the present invention, the method is for producing, for example, A- B diblock copolymer such as methoxypolyetheleneglycol methacrylic acid ester- methacrylic acid and A- B- A triblock copolymer such as methoxypolyetheleneglycol methacrylic acid ester- methacrylic acid- methoxypolyetheleneglycol methacrylic acid ester, specifically the method for producing block copolymer is as follows.

In the case ofA-B diblock copolymer, for example, in the case of methoxypolyetheleneglycol methacrylic acid ester-methacrylic acid copolymer, in the same manner as the production method of the above living radical polymer, first, methoxypolyetheleneglycol methacrylic acid ester is mixed with an organotellurium compound shown in the chemical formula 3 and/or a ditelluride compound shown in the chemical formula 4 and a radical polymerization initiator to produce polymethoxypolyetheleneglycol methacrylic acid ester, followed by mixing with methacrylic acid to obtain methoxypolyetheleneglycol methacrylic acid ester-methacrylic acid copolymer.

Also, in the case of A- B- A triblock copolymer or A- B- C triblock copolymer, a method is listed: after A- B diblock copolymer is produced by the above method, monomer A or monomer C is mixed to obtain A- B- A triblock copolymer or A- B- C triblock copolymer.

After producing each block in the above method, next reaction of block may start as it is, or after completion of reaction and purification, may start. Separation of the block copolymer obtained can be conducted by an ordinary method.

Applications of polymer of the present invention

A polymer of the present invention is a polymer containing a constitutional unit derived from a polyoxyalkylene chain as an essential component being obtained by the above method, the applications include a water based slurry dispersant for an inorganic powder and pigment, cement admixture, scale inhibitor, polymer surfactant, emulsifier, builder for detergent, deinking agent, chelating agent, dye disperser and dispersing agent for coal.

A polymer of the present invention is a polymer containing a constitutional unit derived from a polyoxyalkylene chain as an essential component being obtained by the above method, in particular, in the case of using the polymer of the present invention in cement admixtures, the following manners are preferred.

In use as a polymer for cement admixture, an aqueous solution is preferable from a handling point of view, also, other additives may be contained in a cement admixture of the present invention or may be added when a cement admixture of the present invention is mixed with cement. Known additives for cement can be used as other additives, for example:

(A) Aqueous polymeric materials: unsaturated carboxylic acid polymers such as polyacrylic acid, polymethacrylic acid, polymaleic acid and their sodium salts, and sodium salt of acrylic acid-maleic acid copolymer; polyoxyethylene or polyoxypropylene such as polyethylene glycol and polypropylene glycol, or the copolymers thereof, non-ionic cellulose esters such as methyl cellulose, ethyl cellulose, hydroxymethyl cellulose, hydroxyethyl cellulose, carboxymethyl cellulose, carboxyethyl cellulose and hydroxypropyl cellulose; polysaccharides produced by microbial fermentation such as yeast glucan, xanthan gum, β-1,3 glucans, which may be a linear or branched, for example, curdlan, paramylon, bakiman, scleroglucan and laminaran; polyacylamide; polyvinyl alcohol; starch; starch phosphate ester; sodium alginate; gelatin; acrylic acid copolymers having an amino group in a molecule and the quaternary compounds etc.

(B) Polymer emulsion: copolymers of various vinyl monomers such as alkyl (meth)acrylate.

(C) Retardant: oxycarboxylic acids and the salts such as gluconic acid, glucoheptonic acid, arabonic acid, malic acid or citric acid, and their inorganic salts or organic salts of sodium, potassium, calcium, magnesium, ammonium or triethanolamine; saccharides including monosaccharides such as glucose, fructose, galactose, saccharose, xylose, apiose, ribose and isomerized sugar, oligosaccharide such as disaccharide and trisaccharide or dextrin, polysaccharides such as dextran and molasses containing the saccharides; sugar alcohol like sorbitol; magnesium silica fluoride; phosphoric acid and the salts or esters of boric acid; aminocarboxylic acid and the salts; alkali- soluble

protein; fumic acid, tannic acid; phenols; polyhydric alcohols such as glycerin; phosphonic acid and the derivatives such as aminotri (methylene phosphonic acid), 1- hydroxyethylidene- 1, 1- diphosphonic acid, ethylenediamine tetra (methylene phosphonic acid), diethylenetriamine penta (methylene phoshonic acid) and their alkali metal salts, alkali earth metal salts.

(D) Early strengthening agent & accelerator: soluble calcium salts such as calcium chloride, calcium nitrite, calcium nitrate, calcium bromide and calcium iodide; chlorides such as iron chloride and magnesium chloride; sulfate, potassium hydroxide; sodium hydroxide; carbonate; thiosulfate; formic acid and formats such as calcium formate; alkanolamine; alumina cement; calcium aluminate silicate.

(E) Mineral oil type defoaming agent: kerosene, liquid paraffin etc.

(F) Fat type defoaming agent: animal and plant oil, sesame oil, caster oil, and the alkylene oxide adduct products etc.

(G) Fatty acid type defoaming agent: oleic acid, stearic acid, and the alkylene oxide adduct products etc.

(H) Fatty ester type defoaming agent: glycerin monoricinoleate, alkenyl succinic acid derivatives, sorbitol momolaurate, sorbitor trioleate, natural wax etc.

(I) Oxyalkylene type defoaming agent: polyoxyalkylenes such as (poly) oxyethylene (poly) oxypropylene adduct; (poly) oxyalkyl ethers such as diethylene glycol heptyl ether, polyoxyethylene oleyl ether, polyoxypropylene butyl ether, polyoxyethylene polyoxypropylene 2- ethylhexyl ether, oxyethylene oxypropylene adduct to higher alcohol with carbon atoms of 12 to 14; (poly) oxyalkylene (alkyl) aryl ethers such as polyoxypropylene phenyl ether and polyoxyethylene nonyl phenyl ether; acetylene ethers obtained by addition condensation of alkylene oxide with acetylene alcohol such as 2, 4, 7, 9- tetramethyl- 5- decyne- 4, 7- diol, 2, 5- dimethyl- 3- hexyne- 2, 5- diol, 3- methyl-1- butyne- 3- oh (poly) oxyalkylene fatty esters such as diethylene glycol oleate ester , diethylene glycol laurate ester and ethylene glycol distearate ester; (poly) oxyalkylene sorbitan fatty acid esters such as polyoxyethylene sorbitan monolaurate ester and polyoxyethylene sorbitan trioleate ester; (poly) oxyalkylene alkyl (aryl) ether sulfate ester such as polyoxypropylene methyl ether sodium sulfate and polyoxyethylene dodecyl phenol ether sodium sulfate; (poly) oxyalkylene alkyl phosphate esters such as (poly) oxyethylene stearyl phosphate ester; (poly) oxyalkylene alkylamines such as polyoxyethylene laurylamine; polyalkyleneamide etc.

(J) Alcohol type defoaming agent: octyl alcohol, hexadecyl alcohol, acetylene alcohol, glycols etc.

(K) Amide type defoaming agent: acrylatepolyamine etc.

(L) Phosphate ester type defoaming agent: tributyl phosphate, sodium octyl phosphate etc.

(M) Metal soap type defoaming agent: aluminum stearate, calcium oleate etc.

(N) Silicone type defoaming agent: dimethyl silicone oil, silicone paste, silicone emulsion, organic modified polysiloxane (polyorganosiloxane like dimethyl polysiloxane), fluorosilicone oil etc.

(O) AE agent: resin soap, saturated or unsaturated fatty acid, sodium hydroxystearate, lauryl sulfate, ABS (alkylbenzene sulfonic acid), LAS (linear alkylbenzene sulfonic acid), alkane sulfonate, polyoxyethylene alkyl (phenyl) ether, polyoxyethylene alkyl(phenyl) ether sulfate ester or the salt, polyoxyethylene alkyl(phenyl) ether phosphate ester or the salt, protein materials, alkenyl sulfosuccinic acid, $\alpha$-olefin sulfonate etc.

(P) Other surfactants: aliphatic monovalent alcohol having carbon atoms of 6 to 30 in a molecule such as octadecyl alcohol and stearyl alcohol, alicyclic monovalent alcohol having carbon atoms of 6 to 30 in a molecule such as abiethyl alcohol, monovalent mercaptan having carbon atoms of 6 to 30 in a molecule such as dodecyl mercaptan, alkyl phenol having carbon atoms of 6 to 30 in a molecule such as nonyl phenol, amine having carbon atoms of 6 to 30 in a molecule such as dodecylamine, polyalkylene oxide derivatives of alkylene oxide such as ethylene oxide and propylene oxide of 10 moles or more being added to carboxylic acid having carbon atoms of 6 to 30 in a molecule such as lauryl acid and stearic acid; alkyl diphenyl ether sulfonic acid salts having ether bonding of two phenyl groups having sulfone group that may have a substituent such as alkyl group or alkoxy group; various anionic surfactants; various cationic surfactants such as alkylamine acetate and alkyl trimethyl ammonium chloride; various nonionic surfactant; various ampholytic surfactants etc.

(Q) Water proofing agent: fatty acid or salt, fatty ester, fat and oil, silicone, paraffin, asphalt, wax etc.

(R) Antirust: nitrite, phosphate, zinc oxide etc.

(S) Crack reducing agent: polyoxyalkyl ethers; alkanediols such as 2- methyl- 2, 4- pentanediol

(T) Blowing agent: ettringite type, coal type etc.

As other known cement addition agents or materials, there are listed a cement wetting agent, thickening agent, separation reducing agent, coagulant, dry-shrinkage reducing agent, strength enhancing agent, self-leveling agent, antirust, colorant, fungicide, blast furnace slag, fly ash, ash deposits, clinker ash, bask ash, silica fume, silica powder and gypsum and the like. These known cement addition agents or materials may be used alone or concomitantly in 2 or more sorts thereof.

Further, the cement admixtures of the present invention can concomitantly employ known cement dispersants, for example, the following ones can be used.

Lignin sulfonic acid salts; polyol derivatives; naphthalene sulfonic acid formalin condensate; melamine sulfonic

acid formalin condensate; polystyrene sulfonic acid salt; aminosulfonic acid system such as aminoaryl sulfonic acid-phenol- formaldehyde condensate as described in Japanese Unexamined Patent Publication Hei 1- 113419 (1989) ; cement dispersant as described in Japanese Unexamined Patent Publication Hei 7- 267705 (1995) comprising: as component (a), copolymer of polyalkylene glycol mono (meth) acrylic acid ester based compound with (meth) acrylic acid ester based compound, and/or the salt, as component (b), copolymer of polyalkylene glycol mono (meth) allylether based compound with maleic anhydride, and/or the hydrolysate and/ or the salt, as component (c), copolymer of polyalkylene glycol mono (meth) allyl ether based compound with malate of polyalkylene glycol based compound, and/ or the salt; concrete admixture as described in Japanese patent No. 2508113 specification comprising: as component A, copolymer of polyalkylene glycol (meth) acrylic acid ester with (meth) acrylic acid or salt, as component B, a specific polyethylene glycol polypropylene glycol based compound, and as component C, a specific surfactant; copolymer as described in Japanese Unexamined Patent Publication Shou 62- 216950 (1987) comprising polyethylene or polypropylene glycol (meth) acrylic acid ester, or polyethylene or polypropylene glycol mono (meth) allyl ether, (meth) allyl sulfonic acid or salt, and (meth) acrylic acid or salt. Copolymer as described in Japanese Unexamined Patent Publication Hei 1- 226757 (1989) comprising polyethylene or polypropylene glycol (meth) acrylic acid ester, (meth) allyl sulfonic acid or salt, and (meth) acrylic acid or salt; copolymer as described in Japanese Examined Patent Publication Hei 5- 36377 1993) comprising polyethylene or polypropylene glycol (meth) acrylic acid ester, (meth) allyl sulfonic acid or salt, or p-(meth) allyloxybenzene sulfonic acid or salt, and (meth) acxylic acid or salt; copolymer of polyethylene glycol mouo (meth) auyl ether with maleic acid or salt as described in Japanese Unexamined Patent Publication Hei 4- 149056 (1992) ; copolymer as described in Japanese Unexamined Patent Publication Hei 5- 170501 (1993) comprising polyethylene glycol (meth) acrylic acid ester, (meth) allyl sulfonic acid or salt, (meth) acrylic acid or salt, alkanediol mono (meth) acrylate, polyalkylene glycol mono (meth) acrylate and $\alpha$, $\beta$- unsaturated monomer having an amide group (s) in a molecule (s) ; copolymer as described in Japanese Unexamined Patent Publication Hei 6- 191918 (1994) comprising polyethylene glycol mono (meth) allyl ether, polyethylene glycol mono (meth) acrylate, alkyl (meth) acrylate, (meth) acrylic acid or salt, and (metb) allyl sulfonic acid or salt or p- (meth) allyloxybenzene sulfonic acid or salt; as described in Japanese Unexamined Patent Publication Hei 5- 43288 (1993), copolymer of alkoxypolyalkylene glycol monoallyl ether with maleic anhydride, or the hydrolysate, or the salt; as described in Japanese Examined Patent Publication Shou 58- 38380 (1983), copolymer of ethylene glycol monoallyl ether, maleic acid, and monomers capable of copolymerizing these monomers, or the salts, or the esters. Copolymer as described in Japanese Examined Patent Publication Shou 59- 18338 (1984) comprising polyalkylene mono (meth) acrylic acid ester based monomer, (meth) acrylic acid based monomer, and monomers capable of copolymerizing these monomers; as described in Japanese Unexamined Patent Publication Shou 62- 119147 (1987), copolymer of (meth) acrylic acid ester having a sulfonic group with monomers capable of copolymerization according to need, or the salt; as described in Japanese Unexamined Patent Publication Hei 6- 271347 (1994) . esterifiction product of copolymer of alkoxypolyalkylene glycol monoallyl ether with maleic anhydride and polyoxyalkylene derivative having an alkenyl group at an end; as described in Japanese Unexamined Patent Publication Hei 6- 298555 (1994), esterifiction product of copolymer of alkoxypolyalkylene glycol monoallyl ether with maleic anhydride and polyoxyalkylene derivative having a hydroxyl group at an end; as described in Japanese Unexamined Patent Publication Shou 62- 68806 (1987), copolymer composed of alkenyl ether based monomer that ethylene oxide or the like is added to a specific unsaturated alcohol such as 3- methyl- 3- butene- 1- ol, unsaturated carboxylic acid based monomer, and monomers capable of copolymerizing these monomers, or polycarboxylic acid or salt like the salt. These cement dispersants may be used alone or concomitantly in 2 or more sorts thereof.

As other known cement addition agents or materials, there are listed a cement wetting agent, thickening agent, separation reducing agent, coagulant, dry-shrinkage reducing agent, strength enhancing agent, self-leveling agent, antirust, colorant and fungicide and the like. These known cement addition agents or materials may be used alone or concomitantly in 2 or more sorts thereof.

In the above cement composition, particularly preferable embodiments for components other than cement and water are listed in the following (1) through (7).

(1) Combination that essentially needs two components of cement admixture of the present invention and oxyalkylene type defoaming agent: The oxyalkylene type defoaming agent can employ polyoxyalkylenes, polyoxyalkylene alkyl ethers, polyoxyalkylene acetylene ethers, and polyoxyalkylene alkylamines, in particular polyoxyalkylene alkylamines are preferred. Additionally, a weight ratio of formulation of oxyalkylene type defoaming agent to cement admixture is preferably in a range of 0.01 to 20 wt%.

(2) Combination that essentially needs three components of cement admixture of the present invention, oxyalkylene type defoaming agent and AE agent: The oxyalkylene type defoaming agent can employ polyoxyalkylenes, polyoxyalkylene alkyl ethers, polyoxyalkylene acetylene ethers, and polyoxyalkylene alkylamines, in particular polyoxyalkylene alkylamines is preferred. Also, as AE agent, fatty acid soap, alkyl sulfate esters and alkylphosphate esters are particularly preferable. Additionally, a weight ratio of formulation of oxyalkylene type defoaming agent to the cement admixture of present invention is preferably in a range of 0.01 to 20 wt% on the basis of cement admixture

of present invention. On the other hand, a ratio of formulation of AE agent to cement is preferably in a range of 0.001 to 2 wt%.

(3) Combination that essentially needs three components of cement admixture of the present invention, copolymer composed of polyalkylene glycol mono(meth)acrylic acid based monomer having a polyalkylene chain that alkyleneoxide with carbon atoms of 2-18 is added in an average addition number of moles of 2-300, (meth)acrylic acid based monomer, and monomers capable of copolymerizing these monomers, as described Japanese Examined Patent Publication Shou 59-18338 (1984), Japanese Unexamined Patent Publication Hei 7-223852 (1995) and Hei 9-241056 (1997), and oxyalkylene type defoaming agent. Additionally, a weight ratio of formulation of the cement admixture of present invention to said copolymer is preferably in a range of 5/95 to 95/5, more preferably in a range of 10/90 to 90/10. A weight ratio of formulation of the oxyalkylene type defoaming agent to the total amount of cement admixture of present invention and said copolymer is preferably in a range of 0.01 to 20 wt%.

(4) Combination that essentially needs two components of cement admixture of the present invention and retardant: The retardant can employ oxycarboxylic acids such as gluconic acid or salt and citric acid or salt, saccharides such as glucose, sugar alcohols such as sorbitol, and phosphonic acids such as aminotri(methylene phosphonic acid). Additionally, as a ratio of formulation of the cement admixture of present invention to the retardant, a weight ratio of copolymer (A) and/or copolymer (B) to the retardant is preferably in a range of 50/50 to 99.9/0.1, more preferably in a range of 70/30 to 99/1.

(5) Combination that essentially needs two components of cement admixture of the present invention and accelerator: The accelerator can employ soluble calcium salts such as calcium chloride, calcium nitrite, calcium nitrate, chlorides such as iron chloride and magnesium chloride; thiosulfate; formic acid and formic acid salts such as calcium formate. Additionally, a weight ratio of formulation of the cement admixture of the present invention to the accelerator is preferably in a range of 10/90 to 99.9/0.1, more preferably in a range of 20/80 to 99/1.

(6) Combination that essentially needs two components of cement admixture of the present invention and material separation reducing agent: The material separation reducing agent can employ various thickening agents such as non-ionic cellulose ethers, as a partial structure a compound having hydrophobic substituent composed of hydrocarbon chain with carbon atoms of 4 to 30 and a polyoxyalkylene chain that alkylene oxide with carbon atoms of 2 to 18 is added in an average addition number of moles of 2 to 300. Additionally, a weight ratio of formulation of the cement admixture of the present invention to the material separation reducing agent is preferably in a range of 10/90 to 99.99/0.01, more preferably in a range of 50/50 to 99.9./0.1. The cement composition of this combination is preferable for a high flow concrete, self-filling concrete and self-leveling concrete etc.

(7) Combination that essentially needs two components of cement admixture of the present invention and sulfonic acid type dispersant having a sulfonic acid group in a molecule: The sulfonic acid type dispersant can employ lignin sulfonic acid salt, naphthalene sulfonic acid formalin condensate, melamine sulfonic acid formalin condensate, polystyrene sulfonic acid salt and aminosulfonic acid system dispersant such as aminoaryl sulfonic acid-phenol-formaldehyde condensate. Additionally, regarding a ratio of formulation of the cement admixture of the present invention to the sulfonic acid type dispersant having a sulfonic acid group in a molecule, a weight ratio of the cement admixture of present invention to the sulfonic acid type dispersant having a sulfonic acid group is preferably in a range of 5/95 to 95/5, more preferably in a range of 10/90 to 90/10.

The cement admixture of the present invention can be used by adding to a cement composition such as cement paste, mortar and concrete in the same manner as the known cement admixtures. Also, it can be used for a supper strength concrete. As the above cement composition, ordinary one including cement, water, a fine aggregate, a coarse aggregate and the like is preferable. Also, it may contain minute powder such as fly ash, blast furnace slag, silica fume and limestone. Additionally, the supper strength concrete is one that is generally referred to in a cement composition field, namely means that its hardened product has an equal or higher strength than that of conventional one even in a small ratio of water to cement as compared with a conventional concrete, for example, concrete holds a workability not disturbing ordinary use in a ratio of water/cement of 25 wt% or less, further 20 wt% or less, 18 wt% or less, particularly 14 wt% or less, and particularly 12 wt% or less, and its hardened product exhibits compressive strength of preferably 60 N/mm$^2$ or more, more preferably 80 N/mm$^2$ or more, further preferably 100 N/mm$^2$ or more, further preferably 120 N/mm$^2$ or more, further preferably 160 N/mm$^2$ or more, and particularly preferably 200 N/mm$^2$ or more.

The preferable foregoing cement is portland cement such as ordinary, high- eaxly- strength, ultra high- early-strength, moderate- heat and white; and mixed portland cement such as alumina cement, fly ash cement, blast furnace cement and silica cement. As the amount of formulation per concrete of 1m$^3$ for the above cement and unit quantity of water to produce a concrete having high durability and high strength, for example, unit quantity of water of 100 to 185 kg/m$^3$ and water/ cement ratio of 10 to 70% are preferable, and unit quantity of water of 120 to 175 kg/m$^3$ and water/ cement ratio of 20 to 65% are more preferable.

As a ratio of addition amount of the cement admixture of the present invention in a cement composition, it is preferable that the total weight of polycarboxylic acid based polymer (A) and polycarboxylic acid based polymer (B) of

the essential component of the present invention is 0.01 wt% or more relative to the total cement weight of 100 wt%, and 10 wt% or less. When less than 0.01 wt%, there is a risk of insufficient performance, when more than 10 wt%, economical efficiency becomes poor. It is more preferably 0.05 wt% or more and 8 wt% or less, further preferably 0.1 wt% or more and 5 wt% or less. Additionally, the above wt% (% by weight) is a reduced value in solid content.

Examples

The present invention will be specifically described with reference to examples below, the present invention is not to be limited to the following examples, it can be conducted with suitable modifications within an adequate range to the spirit described above or below, these are included in the technical scope of the present invention.

Measuring condition of molecular weight and molecular weight distribution of polymer

Apparatus: Waters Alliance (2695)
Analysis software: Empower professional + GPC option manufactured by Waters Corporation
Column: TSK gel guard column (inner diameter 6.0×40 mm) + G4000SWXL+ G3000SWXL+ G2000SWXL (each inner diameter 7.8x300 mm), manufactured by TOSOH Co., Ltd.
Detector: Differential refractometer (RI) (Waters 2414), multi-wavelength visible light and ultraviolet (PDA) Detector (Waters 2996)
Eluent: Prepared from dissolving 115.6 g of sodium acetate trihydrate in solution made of 6001 g of acetonitrile and 10999 g of water, and then adjusted to pH 6.0 with an acetic acid.
Flow rate: 1.0 mL/min
Column & Measurement temperature: 40°C
Measuring time: 45 minutes
Injection amount of sample liquid: 100μL (sample concentration 0.2-0.5 wt% in eluent solution)
GPC standard sample: Polyethylene glycol manufactured by GL Sciences Inc., Mp = 272,500, 219,300, 107,000, 50,000, 24,000, 11,840, 6,450, 4,250, 1,470, 9 of which were used
Calibration curve: Prepared in a tertiary formula using Mp values of the above polyethylene glycols.
Analysis: In a RI chromatogram obtained, flat stable parts in the base line just before and after polymer elution were brought into a line to detect and analyze polymer. However, when a monomer peak measured is overlapped with a polymer peak, the polymer part and monomer part were separated by a vertical division at the lowest concave part in the overlapped part of monomer and polymer, so that a molecular weight and molecular weight distribution of only polymer part were measured. When oligomers of dimmer or more were detected, they were included in the polymer part. In the following, the ratio of polymer peak area to the sum of polymer peak area and monomer peak area is referred to as the polymer net content.

GPC fractionating condition of polymer

Fraction apparatus: HLC-8070 manufactured by TOSOH Co., Ltd.
Column: TSK gel α-M+ α-2500 (inner diameter 1 inch, column length 30 cm) manufactured by TOSOH Co., Ltd.
Detector: Ultraviolet detector, 254 nm
Eluent: A mixture of 50 mM ammonium formate ion-exchanged water solution/acetonitrile = 85/15 wt% being adjusted to pH 8.0 by addition of sodium hydroxide (30%)
Flow rate: 5 ml/min
Column & Measurement temperature: 40°C
Injection amount of sample liquid: 3 mL (sample concentration 18.4 mg/mL, in 2 wt% eluent solution)
GPC standard sample: Polyethylene glycol manufactured by TOSOH Co., Ltd., Mp = 272500, 219300, 107000, 50000, 24000, 11840, 6450, 4250, 1470, 9 of which were used
Calibration curve: Prepared in a tertiary formula using Mp values of the above polyethylene glycols.

Production example 1: Synthesis of Comparative polymer 1-1

In a 3L glass reaction apparatus of inner diameter of 16 cm equipped with a thermometer, a stirring machine with a blade of 2.5 cm high and 11 cm wide, a dripping machine, a nitrogen introducing tube and a reflux condenser,

420 g of water was loaded, and heated to 80°C while the inside of reaction apparatus was replaced with nitrogen in 100 mL/min under stirring at 200 rpm. Subsequently, in the same condition, into the reaction apparatus, an aqueous solution mixed with 450.319 g of methoxypolyethylene glycol monomethacrylate (average addition number of mole of 25 of ethylene oxide), 89.681 g of methacrylic acid, 4.511 g of 3-mercaptopropionic acid (MPA) and 135 g of water was added dropwise over 4 hours, a total of 105 g of an aqueous solution adjusted by adding 6.21 g of ammonium persulfate to water was added dropwise over 5 hours respectively at a uniform speed. After completion of all droppings, the polymerization reaction was completed by maintaining a temperature at 80°C further for 1 hour and cooled down to produce Comparative polymer 1-1. The obtained polymer had Mw = 24225, and Mw/Mn = 1.928.

Production examples 2-4: Synthesis of Comparative polymers 1-2 to 1-4

Comparative polymers with different Mw were produced in the same manner as in Production example 1 except that the amount of chain transfer agent (MPA) was changed. The physical properties of the polymers obtained are shown in Table 1.

Table 1

| Polymer | GPC measurement of molecular weight | | MD value | MD value-PD value |
|---|---|---|---|---|
| | Mw | Mw/Mn | | |
| Comparative polymer 1-1 | 24200 | 1.93 | 1.87 | -0.06 |
| Comparative polymer 1-2 | 22900 | 1.84 | 1.83 | -0.01 |
| Comparative polymer 1-3 | 15500 | 1.65 | 1.64 | -0.01 |
| Comparative polymer 1-4 | 13800 | 1.61 | 1.59 | -0.02 |

Production example 5: Synthesis of Comparative polymer 2-1

In a 3L glass reaction apparatus of inner diameter of 16 cm equipped with a thermometer, a stirring machine with a blade of 2.5 cm high and 11 cm wide, a dripping machine, a nitrogen introducing tube and a reflux condenser, 484.502 g of ethylene oxide adduct of 3- methyl- 3- butene- 1- ol (average addition number of mole of 50 of ethylene oxide), 0.875 g of acrylic acid and 250.043 g of water were loaded, and heated to 58°C while the inside of reaction apparatus was replaced with nitrogen in 100 mL/min under stirring at 200 rpm. Subsequently, in the same condition, into the reaction apparatus, a total of 38.112 g of an aqueous solution adjusted by adding 2.541 g of 30% hydrogen peroxide solution to water was added and heated to 58°C. Subsequently, in the same condition, an aqueous mixture of 64.623 g of acrylic acid and 61.845 g of water, and a total of 100 g of an aqueous solution adjusted by adding 0.967 g of L- ascorbic acid and 2.141 g of 3- mercaptopropionic acid (MPA) to water were added dropwise over 3 hours, and 3.5 hours, respectively in the reaction apparatus at a uniform speed. However, a time from the start of heating to the start of dropping was less than 2 hours. After completion of all droppings, the polymerization reaction was completed by maintaining a temperature at 58°C further for 1 hour and cooled down to produce Comparative polymer 2- 1. The obtained polymer had Mw = 36606, and Mw/Mn = 1.978.

Production examples 6-8: Synthesis of Comparative polymers 2-2 to 2-4

Comparative polymers with different Mw were produced in the same manner as in Production example 5 except that the amount of chain transfer agent (MFA) was changed. The physical properties of the polymers obtained are shown in Table 2.

Table 2

| Polymer | GPC measurement of molecular weight | | MD value | MD value-PD value |
|---|---|---|---|---|
| | Mw | Mw/Mn | | |
| Comparative polymer 2-1 | 36600 | 1.98 | 1.87 | -0.10 |
| Comparative polymer 2-2 | 33800 | 1.92 | 1.82 | -0.10 |
| Comparative polymer 2-3 | 24100 | 1.69 | 1.63 | -0.06 |
| Comparative polymer 2-4 | 22400 | 1.61 | 1.60 | 0.01 |

Production example 9: Synthesis of Comparative polymer 3-1

In a 3L glass reaction apparatus of inner diameter of 16 cm equipped with a thermometer, a stirring machine with a blade of 2.5 cm high and 11 cm wide, a dripping machine, a nitrogen introducing tube and a reflux condenser, 517.826 g of ethylene oxide adduct of 3- methyl- 3- butene- 1- ol (average addition number of mole of 50 of ethylene oxide), 0.935 g of acrylic acid and 267- 241 g of water were loaded, and heated to 58°C while the inside of reaction apparatus was replaced with nitrogen in 100 mL/min under stirring at 200 rpm. Subsequently, in the same condition, into the reaction apparatus, a total of 22.879 g of an aqueous solution adjusted by adding 1.525 g of 30% hydrogen peroxide solution to water was added and heated to 58°C. Subsequently, in the same condition, an aqueous mixture of 31.238 g of acrylic acid and 59.880 g of water, and a total of 100 g of an aqueous solution adjusted by adding 0.592 g of L- ascorbic acid and 1.107 g of 3- mercaptopropionic acid (MPA) to water were added dropwise over 3 hours, and 3.5 hours, respectively in the reaction apparatus at a uniform speed. However, a time from the start of heating to the start of dropping was less than 2 hours. After completion of all droppings, the polymerization reaction was completed by maintaining a temperature at 58°C further for 1 hour and cooled down to produce Comparative polymer 3- 1. The obtained polymer had Mw = 34965, and Mw/Mn = 1.864.

Production examples 10-11: Synthesis of Comparative polymers 3-2 to 3-3

Comparative polymers with different Mw were produced in the same manner as in Production example 9 except that the amount of chain transfer agent (MFA) was changed. The physical properties of the polymers obtained are shown in Table 3.

Table 3

| Polymer | GPC measurement of molecular weight | | MD value | MD value-PD value |
|---|---|---|---|---|
| | Mw | Mw/Mn | | |
| Comparative polymer 3-1 | 35000 | 1.86 | 1.84 | -0.02 |
| Comparative polymer 3-2 | 24900 | 1.71 | 1.65 | -0.06 |
| Comparative polymer 3-3 | 22400 | 1.64 | 1.60 | -0.04 |

Production examples 12-18: Synthesis of Invention polymers 1-1 to 1-5

Using Comparative polymer 1-1 synthesized in Production example 1, GPC fractionation was conducted in the foregoing conditions until the required amount of polymer was obtained. The obtained 7 fractions were evaporated to condense them to about 10 wt% under a reduced pressure at 20 mmHg at 50°C. The condensates were desalted, then evaporated to condense them to about 10 wt% under a reduced pressure at 20 mmHg at 50°C, and then the molecular weight and molecular weight distribution were measured by the foregoing method. The fractionation conditions and physical properties of the polymers obtained are shown in Table 4.

Table 4

| Polymer | GPC fractionation | | GPC measurement of molecular weight | | MD value | MD value -PD value |
|---|---|---|---|---|---|---|
| | Fraction sampling time | | | | | |
| | Start/min | End/min | Mw | Mw/Mn | | |
| Invention polymer 1-1 | 18.80 | 19.80 | 85800 | 1.26 | 3.49 | 2.23 |
| Invention polymer 1-2 | 19.81 | 20.30 | 42800 | 1.25 | 2.36 | 1.11 |
| Invention polymer 1-3 | 20.31 | 21.20 | 22500 | 1.36 | 1.82 | 0.46 |
| Invention polymer 1-4 | 21.21 | 21.90 | 15800 | 1.38 | 1.63 | 0.25 |

(continued)

| Polymer | GPC fractionation Fraction sampling time | | GPC measurement of molecular weight | | MD value | MD value -PD value |
|---|---|---|---|---|---|---|
| | Start/min | End/min | Mw | Mw/Mn | | |
| Invention polymer 1-5 | 21.91 | 22.60 | 14200 | 1.36 | 1.60 | 0.24 |
| Reference polymer 1-6 | 22.61 | 23.20 | 11700 | 1.51 | 1.54 | 0.03 |
| Reference polymer 1-7 | 23.71 | 23.00 | 9200 | 1.64 | 1.47 | -0.16 |

Production examples 19-25: Synthesis of Invention polymers 2-2 to 2-5 and 2-7

Invention polymers 2-2 to 2-5 and 2-7 were obtained by conducting GPC fractionation on Comparative polymer 2-lsynthesized in Production example 5 in the same procedure as the method for obtaining the Invention polymers 1-1 to 1-5. The fractionation conditions and physical properties of the polymers obtained are shown in Table 5.

Table 5

| Polymer | GPC fractionation Fraction sampling time | | GPC measurement of molecular weight | | MD value | MD value -PD value |
|---|---|---|---|---|---|---|
| | Start/min | End/min | Mw | Mw/Mn | | |
| Reference polymer 2-1 | 18.00 | 20.10 | 113100 | 1.20 | 3.36 | 2.16 |
| Invention polymer 2-2 | 20.11 | 20.70 | 60500 | 1.26 | 2.34 | 1.08 |
| Invention polymer 2-3 | 20.71 | 21.30 | 34200 | 1.35 | 1.83 | 0.48 |
| Invention polymer 2-4 | 21.31 | 21.90 | 24200 | 1.31 | 1.63 | 0.32 |
| Invention polymer 2-5 | 21.91 | 22.35 | 22100 | 1.35 | 1.59 | 0.24 |
| Reference polymer 2-6 | 22.36 | 22.75 | 18500 | 1.62 | 1.52 | -0.10 |
| Invention polymer 2-7 | 22.76 | 23.50 | 14200 | 2.03 | 1.44 | 0.59 |

Production examples 26-32: Synthesis of Invention polymers 3-2 to 3-5

Invention polymers 3-2 to 3-5 were obtained by conducting GPC fractionation on Comparative polymer 3-1 synthesized in Production example 9 in the same procedure as the method for obtaining the Invention polymers 1-1 to 1-5. The fractionation conditions and physical properties of the polymers obtained are shown in Table 6.

Table 6

| Polymer | GPC fractionation Fraction sampling time | | GPC measurement of molecular weight | | MD value | MD value -PD value |
|---|---|---|---|---|---|---|
| | Start/min | End/min | Mw | Mw/Mn | | |
| Reference polymer 3-1 | 18.00 | 20.10 | 124800 | 1.31 | 3.58 | 2.27 |

(continued)

| Polymer | GPC fractionation Fraction sampling time | | GPC measurement of molecular weight | | MD value | MD value -PD value |
|---|---|---|---|---|---|---|
| | Start/min | End/min | Mw | Mw/Mn | | |
| Invention polymer 3-2 | 20.11 | 20.70 | 70300 | 1.29 | 2.53 | 1.24 |
| Invention polymer 3-3 | 20.71 | 21.30 | 36000 | 1.35 | 1.86 | 0.51 |
| Invention polymer 3-4 | 21.31 | 21.90 | 25900 | 1.41 | 1.67 | 0.26 |
| Invention polymer 3-5 | 21.91 | 22.35 | 22300 | 1.35 | 1.60 | 0.25 |
| Reference polymer 3-6 | 22.36 | 22.75 | 12600 | 1.55 | 1.41 | -0.14 |
| Reference polymer 3-7 | 22.76 | 23.50 | 9800 | 1.57 | 1.35 | -0.21 |

Production example 33: Synthesis of catalyst A

A compound that ethylene oxide is added to each of active hydrogen atoms of polyethyleneimine having molecular weight of 300 by 8 equivalent weights (hereinafter abbreviated as PEIEO, Mw=2814) was synthesized by a conventional method. PEIEO (50.84 g, 1 equivalent weight) was dissolved in 50.8 g of ion-exchanged water, deaerated under a reduced pressure at 100 mmHg at 25°C while stirring, then the inside system was replaced with nitrogen and returned to ambient pressure. Under nitrogen atmosphere, CuBr (4.146 g, 1.6 equivalent weights) was added thereto, followed by stirring for 1 hour to yield an aqueous solution of catalyst A.

Production example 34: Synthesis of catalyst B

PEIEO (45.34 g, 1 equivalent weight) was dissolved in 45.3 g of ion-exchanged water, deaerated under a reduced pressure at 100 mmHg at 25°C while stirring, then the inside system was replaced with nitrogen and returned to ambient pressure. Under nitrogen atmosphere, $CuBr_2$ (4.678 g, 1.3 equivalent weights) was added thereto, followed by stirring for 1 hour to yield an aqueous solution of catalyst B.

Production example 35: Synthesis of Invention polymer 4

A mixture of aqueous solution of catalyst A (1.171 g) prepared in Production example 33, aqueous solution of catalyst B (0.364 g) prepared in Production example 34, ethyl 2-bromoisobutyrate (0.234 g) and ion-exchanged water (18.829 g) was deaerated under a reduced pressure at 100 mmHg at 25°C while stirring, then the inside system was replaced with nitrogen and returned to ambient pressure to yield an aqueous solution of catalyst C. A mixture of methacrylic acid (2.492 g), methoxypolyethylene glycol monomethacrylate (average EO addition number of moles of 75; 12.508 g) and ion-exchanged water (5 g) was deaerated under a reduced pressure at 100 mmHg at 25°C while stirring, then the inside system was replaced with nitrogen and returned to ambient pressure to yield an aqueous monomer solution. After the aqueous monomer solution was heated to 50°C under nitrogen atmosphere, the aqueous solution of catalyst C heated at 50°C was added thereto to start polymerization reaction, maintained at 50°C for 24 hours while stirring to complete the polymerization reaction, thereby to obtain Invention polymer 4. The obtained polymer had Mw = 35700, and Mw/Mn = 1.40.

Production examples 36: Synthesis of Invention polymer 5

A mixture of aqueous solution of catalyst A (0.878 g) prepared in Production example 33, aqueous solution of catalyst B (0.728 g) prepared in Production example 34, ethyl 2-bromoisobutyrate (0.117 g) and ion-exchanged water (19.122 g) was deaerated under a reduced pressure at 100 mmHg at 25°C while stirring, then the inside system was replaced with nitrogen and returned to ambient pressure to yield an aqueous solution of catalyst C. A mixture of methacrylic

acid (2.492 g), methoxypolyethylene glycol monomethacrylate (average EO addition number of moles of 75; 12.508 g) and ion-exchanged water (5 g) was deaerated under a reduced pressure at 100 mmHg at 25°C while stirring, then the inside system was replaced with nitrogen and returned to ambient pressure to yield an aqueous monomer solution. After the aqueous monomer solution was heated to 50°C under nitrogen atmosphere, the aqueous solution of catalyst C heated at 50°C was added thereto to start polymerization reaction, maintained at 50°C for 24 hours while stirring to complete the polymerization reaction, thereby to obtain Invention polymer 5. The obtained polymer had Mw = 30500, and Mw/Mn = 1.36.

Production example 37. Synthesis of Comparative polymer 4

In a 3L glass reaction apparatus of inner diameter of 16 cm equipped with a thermometer, a stirring machine with a blade of 2.5 cm high and 11 cm wide, a dripping machine, a nitrogen introducing tube and a reflux condenser, 400 g of water was loaded, and heated to 80°C while the inside of reaction apparatus was replaced with nitrogen in 100 mL/min under stirring at 200 rpm. Subsequently, while maintaining the reaction apparatus at 80°C, into the reaction apparatus, 500 g of aqueous mixture adjusted by adding 166.785 g of methoxypolyethylene glycol monomethacrylate (average addition number of mole of 75 of ethylene oxide), 33.215 g of methacrylic acid and 1.592 g of 3-mercaptopropionic acid to ion-exchanged water was added dropwise over 4 hours, a total of 100 g of an aqueous solution adjusted by adding 2.292 g of ammonium persulfate to ion-exchanged water was added dropwise over 5 hours respectively at a uniform speed. After completion of all droppings, the polymerization reaction was completed by maintaining a temperature at 80°C further for 1 hour to produce Comparative polymer 4. The obtained polymer had Mw = 36400, and Mw/Mn = 1.74.

<Examples 1 to 10 and Comparative Examples 1to 12>

According to the method in the following mortar test 1, a mortar test was conducted by using Invention polymers 1-3 to 1-5 (Examples 1 to 3), Invention polymers 2-3 to 2-5 (Examples 4 to 6), Invention polymers 3-3 to 3-5 (Examples 7 to 9), Invention polymer 4 (Example 10), Comparative polymers 1-1 to 1-4 (Comparative Examples 1 to 4), Comparative polymers 2-1 to 2-4 (Comparative Examples 5 to 8), Comparative polymers 3-1 to 3-3 (Comparative Examples 9 to 11), Comparative polymer 4 (Comparative Example 12). The result is shown in Tables 7 to 10.

<Mortar test 1>

Mortar formulation

Mortar formulation was set in C/S/W = 600/600/210 (g), wherein,
C: Ordinary portland cement manufactured by Taiheiyou Cement Corporation
S: Toyoura standard sand
W: Ion-exchanged water solution of sample

Mortar test atmosphere

Test atmosphere was set at 20°C±1°C and 60%±10% in relative humidity

Mortar kneading procedure

A predetermined amount of aqueous polymer solution was weighed out, 10 wt% defoaming agent (MA-404 manufactured by Pozzolith Corp.) based on polymer was added as it was, further ion-exchanged water was added thereto to 210 g and dissolved homogeneously.

Beaters of stainless steal (stirring blade) were set in N-50 mixer (manufactured by HOBART Corp.), then a predetermined amount of cement (C) and sand (S) were loaded in a kneading container. After kneading for 15 seconds at a first speed, water solution of sample (W) was poured at a uniform speed over 15 seconds while stirring- Subsequently, after kneading at a second speed for 30 seconds, then stopped, and mortar that adhered to the wall of container was peeled away and left at rest for 45 seconds. The kneading at the second speed for 90 seconds was a completion of kneading, the mortar in the kneading container was transferred to a 1L container made of polyethylene.

Mortar flow measuring procedure

The kneaded mortar was immediately stirred with a spatula 20 times, then loaded uniformly into a flow corn of SUS 304 with inner diameter of 55 mm and height of 50 mm disposed on a flat plate of SUS 304, and the surface was

smoothed. The flow corn was vertically hoisted, after the flow was finished, a diameter of mortar spread was measured at 2 points longwise and sidewise, whose average was defined as a flow value. In this case, it was set to take 5 and half minutes or less from the start of kneading to the measurement of flow value.

Mortar air amount measuring procedure

About 200 mL of mortar was loaded in a glass messcylinder of 500 mL, pushed with a round bar having a diameter of 8 mm, then the messcylinder was vibrated to remove coarse bubbles. Further, about 200 mL of mortar was added thereto, and bubbles were removed in the same manner. Then, the weight and volume of these mortars were measured to calculate an air amount from the weight and densities of respective materials.

Results of mortar test

The results of mortar test for Invention polymers and Comparative polymers are shown in Table 7-10.

Table 7

| | Polymer used | GPC measurement of molecular weight | | Mortar test | |
|---|---|---|---|---|---|
| | | Mw | Mw/Mn | Amount of agent added (wt%/C) | Flow value (mm) |
| Example 1 | Invention polymer 1-3 | 22500 | 1.36 | 0.10 | 207 |
| Example 2 | Invention polymer 1-4 | 15300 | 1.38 | 0.10 | 220 |
| Examples 3 | Invention polymer 1-5 | 14200 | 1.36 | 0.10 | 214 |
| Comparative Example 1 | Comparative polymer 1-1 | 24200 | 1.93 | 0.10 | 164 |
| Comparative Example 2 | Comparative polymer 1-2 | 22900 | 1.84 | 0.10 | 165 |
| Comparative Example 3 | Comparative polymer 1-3 | 15500 | 1.65 | 0.10 | 152 |
| Comparative Example 4 | Comparative polymer 1-4 | 13800 | 1.61 | 0.10 | 148 |

Table 7 shows the results of mortar test for a polymer that polyalkylene glycol is bonded to a main chain by ester bonding. When mortar flow values in 0.1 wt% addition amount of Invention polymers 1-3 to 1-5 are compared to Comparative polymers 1-1 to 1-4 with almost the same weight-average molecular weight (Mw) as Invention polymers, Invention polymers have the values of 207mm to 220 mm whereas Comparative polymers have the values of 148 mm to 165 mm, which indicates better dispersing performance of Invention polymers. It is assumed that this fact results from a very narrow degree of dispersion (Mw/Mn) of 1.36-1.38 for Invention polymers as compared with the degree of dispersion of 1.57-1.93 for Comparative polymers.

Table 8

| | Polymer used | GPC measurement of molecular weight | | Mortar test | |
|---|---|---|---|---|---|
| | | Mw | Mw/Mn | Amount of agent added (wt%/C) | Flow value (mm) |
| Example 4 | Invention polymer 2-3 | 34200 | 1.35 | 0.10 | 193 |

(continued)

| | Polymer used | GPC measurement of molecular weight | | Mortar test | |
|---|---|---|---|---|---|
| | | Mw | Mw/Mn | Amount of agent added (wt%/C) | Flow value (mm) |
| Examples 5 | Invention polymer 2-4 | 24200 | 1.31 | 0.10 | 214 |
| Example 6 | Invention polymer 2-5 | 22100 | 1.35 | 0.10 | 185 |
| Comparative Example 5 | Comparative polymer 2-1 | 36600 | 1.98 | 0.10 | 162 |
| Comparative Example 6 | Comparative polymer 2-2 | 33800 | 1.92 | 0.10 | 166 |
| Comparative Example 7 | Comparative polymer 2-3 | 24100 | 1.69 | 0.10 | 170 |
| Comparative Example 8 | Comparative polymer 2-4 | 22400 | 1.61 | 0.10 | 158 |

Table 8 shows the results of mortar test for a polymer that polyalkylene glycol chain is bonded to a main chain by ether bonding. When mortar flow values in 0.1 wt% addition amount of Invention polymers 2-3 to 2-5 are compared to Comparative polymers 2-1 to 2-4 with almost the same weight-average molecular weight (Mw) as Invention polymers, Invention polymers have the values of 185 mm to 214 mm whereas Comparative polymers have the values of 158 mm to 170 mm, which indicates better dispersing performance of Invention polymers. It is assumed that this fact results from a very narrow degree of dispersion (Mw/Mn) of 1.31-1.35 for Invention polymers as compared with the degree of dispersion of 1.54-1.93 for Comparative polymers. The result was the same as the polymer that polyalkylene glycol chain was bonded to a main chain by ester bonding shown in Table 7.

Table 9

| | Polymer used | CPC measurement of molecular weight | | Mortar test | |
|---|---|---|---|---|---|
| | | Mw | Mw/Mn | Amount of agent added (wt%/C) | Flow value (mm) |
| Example 7 | Invention polymer 3-3 | 36000 | 1.35 | 0.10 | 208 |
| Example 8 | Invention polymer 3-4 | 25900 | 1.41 | 0.10 | 219 |
| Example 9 | Invention polymer 3-5 | 22300 | 1.35 | 0.10 | 186 |
| Comparative Example 9 | Comparative polymer 3-1 | 35000 | 1.86 | 0.10 | 174 |
| Comparative Example 10 | Comparative polymer 3-2 | 24900 | 1.71 | 0.10 | 170 |
| Comparative Example 11 | Comparative polymer 3-3 | 22400 | 1.64 | 0.10 | 154 |

Table 9 shows the results of mortar test for a polymer that polyalkylene glycol chain is bonded to a main chain by ether bonding in the same manner as described above. In the same as the above result, Invention polymers with degree of dispersion of 1.35-1.41 have the mortar flow values of 186 mm to 219 mm whereas Comparative polymers with degree of dispersion of 1.64-1.78 have the mortar flow values of 154 mm to 177 mm, Invention polymers with narrower molecular weight distribution have better cement dispersing performance.

Table 10

| | Polymer used | GPC measurement of molecular weight | | MD value | MD value-PD value | Mortar test | |
|---|---|---|---|---|---|---|---|
| | | Mw | Mw/Mn | | | Amount of agent added (wt%/C) | Flow value (mm) |
| Example 10 | Invention polymer 4 | 35700 | 1.40 | 1.70 | 0.30 | 0.10 | 222 |
| Comparative Example 12 | Comparative polymer 4 | 36400 | 1.74 | 1.72 | -0.02 | 0.10 | 170 |

Table 10 shows the results of mortar test for Invention polymer 4 obtained by living radical polymerization and Comparative polymer 4 obtained by a conventional radical polymerization. When the mortar flow values are compared each other at the same addition amount, Invention polymer 4 obtained by living radical polymerization has the mortar flow value of 222 mm whereas Comparative polymer 4 obtained by a conventional radical polymerization has the mortar flow value of 170 mm, it is known that Invention polymer obtained by living radical polymerization has better cement dispersing performance. Also, in the comparison of degree of dispersion, Invention polymer has 1.40 and Comparative polymer has 1.66, Invention polymer has a narrower molecular weight distribution, and it is assumed that this fact results in the better dispersing performance.

Production example 38: Synthesis of Invention polymer 6

A mixture of aqueous solution of catalyst A (1.098 g) prepared in Production example 33, aqueous solution of catalyst B (0.910 g) prepared in Production example 34, ethyl 2-bromoisobutyrate (0.146 g) and ion-exchanged water (17.062 g) was deaerated under a reduced pressure at 100 mmHg at 25°C while stirring, then the inside system was replaced with nitrogen and returned to ambient pressure to yield an aqueous solution of catalyst C. A mixture of methacrylic acid (2.30 g), methoxypolyethylene glycol monomethacrylate (average EO addition number of moles of 25; 20.20 g) and ion-exchanged water (7.70 g) was deaerated under a reduced pressure at 100 mmHg at 25°C while stirring, then the inside system was replaced with nitrogen and returned to ambient pressure to yield an aqueous monomer solution. After the aqueous monomer solution was heated to 50°C for 24 hours under nitrogen atmosphere, the aqueous solution of catalyst C heated at 50°C was added thereto to start polymerization reaction, maintained at 50°C for 24 hours while stirring to complete the polymerization reaction, thereby to obtain Invention polymer 6. The obtained polymer had Mw = 26700, and Mw/Mn = 1.64.

Production example 39: Synthesis of Invention polymer 7

A mixture of aqueous solution of catalyst A (0.878 g) prepared in Production example 33, aqueous solution of catalyst B (0.273 g) prepared in Production example 34, ethyl 2-bromoisobutyrate (0.176 g) and ion-exchanged water (9.90 g) was deaerated under a reduced pressure at 100 mmHg at 25°C while stirring, then the inside system was replaced with nitrogen and returned to ambient pressure to yield an aqueous solution of catalyst C. A mixture of methacrylic acid (2.24 g), methoxypolyethylene glycol monomethacrylate (average EO addition number of moles of 25; 11.26 g) and ion-exchanged water (4.69 g) was deaerated under a reduced pressure at 100 mmHg at 25°C while stirring, then the inside system was replaced with nitrogen and returned to ambient pressure to yield an aqueous monomer solution. After the aqueous monomer solution was heated to 50°C under nitrogen atmosphere, the aqueous solution of catalyst C heated at 50°C was added thereto to start polymerization reaction, maintained at 50°C for 24 hours while stirring to complete the polymerization reaction, thereby to obtain Invention polymer 7. The obtained polymer had Mw = 19000, and Mw/Mn = 1.55.

Production example 40: Synthesis of Comparative polymer 5

In a glass reaction apparatus equipped with a thermometer, a stirring machine, a dripping machine, a nitrogen introducing tube and a reflux condenser, 1698 g of water was loaded, and heated to 80°C while the inside of reaction apparatus was replaced with nitrogen in 100 mL/min under stirring at 200 rpm. Subsequently, while maintaining the

reaction apparatus at 80°C, into the reaction apparatus, a mixture of 1796 g of methoxypolyethylene glycol monomethacrylate (average addition number of mole of 25 of ethylene oxide), 204 g of methacrylic acid and 16.7 g of 3-mereaptopropionic acid being added to 500 g of ion-exchanged water was added dropwise over 4 hours, 230 g of 10% aqueous ammonium persulfate solution was added dropwise over 5 hours respectively at a uniform speed. After completion of all droppings, the polymerization reaction was completed by maintaining a temperature at 80°C further for 1 hour to produce Comparative polymer 5. The obtained polymer had Mw = 22500, and Mw/Mn = 1.83.

Production example 41: Synthesis of Comparative polymer 6

In a glass reaction apparatus equipped with a thermometer, a stirring machine, a dripping machine, a nitrogen introducing tube and a reflux condenser, 1700 g of water was loaded, and heated to 80°C while the inside of reaction apparatus was replaced with nitrogen in 100 mL/min under stirring at 200 rpm. Subsequently, while maintaining the reaction apparatus at 80°C, into the reaction apparatus, a mixture of 1580 g of methoxypolyethylene glycol monomethacrylate (average addition number of mole of 25 of ethylene oxide), 420 g of methacrylic acid and 14.5 g of 3-mercaptopropionic acid being added to 500 g of ion-exchanged water was added dropwise over 4 hours, 230 g of 10% aqueous ammonium persulfate solution was added dropwise over 5 hours respectively at a uniform speed. After completion of all droppings, the polymerization reaction was completed by maintaining a temperature at 80°C further for 1 hour to produce Comparative polymer 6. The obtained polymer had Mw = 25200, and Mw/Mn = 1.89.

<Examples 11 to 14 and Comparative Examples 13 to 14>

According to the method in the following mortar test 2, a mortar test was conducted by using Invention polymer 6 (Examples 11 to 12), Invention polymer 7 (Examples 13 to 14), Comparative polymer 5 (Comparative Example 13), Comparative polymer 6 (Comparative Example 14). The result is shown in Tables 11 to 12.

<Mortar test 2>

Mortar formulation

Mortar formulation was set in C/S/W = 550/1350/220 (g), wherein,
C: Ordinary portland cement manufactured by Taiheiyou Cement Corporation
S: ISO standard sand (manufactured by Japan Cement Association)
W: Ion-exchanged water solution of sample

Mortar test atmosphere

Test atmosphere was set at 20°C±1°C and 60%±10% in relative humidity

Preparation for mortar, measurement of mortar flow value

A predetermined amount of aqueous polymer solution was weighed out, 10 wt% defoaming agent (MA-404 manufactured by Pozzolith Corp.) based on polymer was added as it was, and further ion-exchanged water was added thereto to 220 g and dissolved homogeneously.

For kneading a mortar, N-50 mixer (manufactured by HOBART Corp.) with stainless steal beaters (stirring blade) was used, and procedures for kneading and measuring mortar flow values were complied with JIS R5201 (1997). An amount of time from the beginning of kneading until the measurement of the flow value was set within 6 minutes and 30 seconds. Measurement of mortar air amount

About 200 mL of mortar was loaded in a glass messcylinder of 500 mL, pushed with a round bar with a diameter of 8 mm, then the messcylinder was vibrated to remove coarse bubbles. Further, about 200 mL of mortar was added thereto, and bubbles were removed in the same manner. Then, the weight and volume of these mortars were measured to calculate an air amount from the weight and densities of respective materials.

Results of mortar test

The results of mortar test for Invention polymers and Comparative polymers are shown in Table 11-12.

Table 11

| | Polymer used | GPC measurement of molecular weight | | Mortar test | | |
|---|---|---|---|---|---|---|
| | | Mw | Mw/Mn | Amount of agent added (wt%/C) | Flow value (mm) | Amount of air (%) |
| Example 11 | Invention polymer 6 | 26700 | 1.61 | 0.12 | 220 | 2.47 |
| Example 12 | Invention polymer 6 | 26700 | 1.64 | 0.14 | 245 | 2.84 |
| Comparative Example 13 | Comparative polymer 6 | 22500 | 1.83 | 0.14 | 223 | 2.40 |

When the mortar flow values are compared to for Invention polymer 6 obtained by living radical polymerization and Comparative polymer 5 obtained by a conventional radical polymerization, while Invention polymer 6 has the flow value of 245 mm at 0.14 wt% addition amount, Comparative polymer 5 has 223 mm. Further, the amount of addition necessary for obtaining the same flow value as Comparative polymer 5 is 0.12 wt%, which allows less amount of addition than Comparative polymer 5 by 14%. In this way, it is known that a polymer obtained by living radical polymerization of the present invention has better cement dispersing performance. Also, in the comparison of Invention polymer 6 and Comparative polymer 5 on degree of dispersion (Mw/Mn), while Invention polymer 6 has 1.64, Comparative polymer 5 has 1.83, it is known that Invention polymer 6 has narrower molecular weight distribution. Invention polymer 6 has a narrow molecular weight distribution and reduced parts of high molecular weight causing cement coagulation and low molecular weight not contributing to cement dispersing performance, more parts of molecular weight contributing to cement dispersing performance than Comparative polymer 5, which is thought to result in the improved cement dispersing performance.

Table 12

| | Polymer used | GPC measurement of molecular weight | | Mortar test | | |
|---|---|---|---|---|---|---|
| | | Mw | Mw/Mn | Amount of agent added (wt%/C) | Flow value (mm) | Amount of air (%) |
| Example 13 | Invention polymer 7 | 19000 | 1.55 | 0.08 | 217 | 3.30 |
| Example 14 | Invention polymer 7 | 19000 | 1.55 | 0.10 | 252 | 2.85 |
| Comparative Example 14 | Comparative polymer 6 | 25200 | 1.89 | 0.10 | 219 | 3.14 |

When the mortar flow values are compared to for Invention polymer 7 obtained by living radical polymerization and Comparative polymer 6 obtained by a conventional radical polymerization, while Invention polymer 7 has the flow value of 252 mm at 0.1 wt% addition amount, Comparative polymer 6 has 210 mm. Further, the amount of addition necessary for obtaining the same flow value as Comparative polymer 6 is 0.08 wt%, which allows less amount of addition than Comparative polymer 6 by 20%. In this way, it is known that a polymer obtained by living radical polymerization of the present invention has better cement dispersing performance. Also, in the comparison of Invention polymer 7 and Comparative polymer 6 on degree of dispersion (Mw/Mn), while Invention polymer 7 has 1.55, Comparative polymer 6 has 1.89, it is known that Invention polymer 7 has narrower molecular weight distribution. Invention polymer 7 has a narrow molecular weight distribution and reduced parts of high molecular weight causing cement coagulation and low molecular weight not contributing to cement dispersing performance, more parts of molecular weight contributing to cement dispersing performance than Comparative polymer 6, which is thought to result in the improved cement dispersing performance.

<Identification of ditelluride compound>

Ditelluride compound was identified by the measurements of $^1$H-NMR and MS.

$^1$H- NMR: 400 MHz- NMft manufactured by Varian Corp.

MS (HRMS): JMS-600 manufactured by JEOL Ltd.

Measuring condition of molecular weight and molecular weight distribution of polymer

Measuring condition of molecular weight and molecular weight distribution of the polymer were same as those in Production Examples 1 to 32, 35 to 41. Acid value of polymer

Acid value of polymer was measured by titration using an automatic titration device COMTITE-550 manufactured by Hiranuma Sangyo Co., Ltd. The acid value represents an amount of mg of potassium hydroxide required for neutralizing an acid contained in 1 g of the polymer. In this case, since an amount of carboxylic acid is measured from neutralization curve, the value is specifically denoted as total carboxylic acid value (hereinafter, it may be abbreviated as "TCAV").

Production example 42: Synthesis of ditelluride compound

6.38 g (50 mmol) of metal tellurium was suspended in 50 mL of THF, 52.9 mL (55 mmol) of methyl lithium dissolved in diethyl ether was slowly added to the suspension at room temperature over 10 minutes. The resultant reaction solution was stirred until metal tellurium was completely disappeared (20 minutes) . To the reaction solution, 11 g (60 mmol) of 1- bromo- 1- phenylethane was added at room temperature and stirred for 2 hours. Solvent was distilated under reduced pressure, and distilled under reduced to yield a pale yellow oily material. It was identified as a target substance using MS (HRMS) and $^1$H- NMR.

Production example 43: Synthesis of Invention polymer 8

In a glove box whose inside was replaced with nitrogen, 0.04 mol of 2, 2'- azobis (isobutyronitrile), 0.04 mol of telluride compound produced in Production example 42, 0.76 mol of methoxypolyethylene glycol monomethacrylate (average addition number of mole of 23 of ethylene oxide) and 1.558 mol of methacrylic acid were stirred at 80°C for 20 hours to obtain Invention polymer 8. The obtained polymer had Mw = 18300, and Mw/Mn = 1.37. Also, the acid value was107.4. The results of GPC analysis and TCAV are shown in Table 13.

Production example 44: Synthesis of Comparative polymer 7

In a glass reaction apparatus equipped with a thermometer, a stirring machine, a dripping machine, a nitrogen introducing tube and a reflux condenser, 126.0 g of water was loaded, the inside of reaction apparatus was replaced with nitrogen, and heated to 80°C under nitrogen atmosphere. Into the reaction apparatus, a monomer mixture of 139.4 g of methoxypolyethylene glycol monomethacrylate (average addition number of mole of 23 of ethylene oxide), 22.6 g of methacrylic acid, 1.2 g of 3-mercaptoethanol and 40.5 g of water was added dropwise over 4 hours, 31.5 g of 5.9 wt% aqueous ammonium persulfate solution was added dropwise over 5 hours respectively at a uniform speed. After completion of all droppings, the polymerization reaction was completed by maintaining a temperature at 80°C further for 1 hour to produce Comparative polymer 7. The obtained polymer had Mw = 21100, and Mw/Mn = 1.82. Also, the acid value was 98.82. The results of GPC analysis and TCAV are shown in Table 13.

Table 13

| Polymer | GPC measurement of molecular weight | | TCAV (KOHmg) | Polymer net content (%) |
|---|---|---|---|---|
| | Mw | Mw/Mn | | |
| Invention polymer 8 | 1.8300 | 1.37 | 102.92 | 92.3 |
| Comparative polymer 7 | 21100 | 1.82 | 98.82 | 97.4 |

<Example 15 and Comparative Examples 15 to 16>

According to the method in the above mortar test 1, a mortar test was conducted by using Invention polymers 8 (Example 15), Comparative polymer 7 (Comparative Example 15), Comparative polymer 7 (Comparative Example

16). The result is shown in Table 14.

Table 14

| | Polymer used | Amount added (wt%) | Flow value after 5 min | Air amount (%) |
|---|---|---|---|---|
| Example 15 | Invention polymer 8 | 0.1 | 195 | 1.1 |
| Comparative Example 15 | Comparative polymer 7 | 0.1 | 163 | 1.6 |
| Comparative Example 16 | Comparative polymer 7 | 0.12 | 195 | 1.1 |

When the mortar flow values are compared to for Invention polymer 8 obtained by living radical polymerization and Comparative polymer 7 obtained by a conventional radical polymerization, while Invention polymer 8 has the flow value of 195 mm at 0.1 wt% addition amount, Comparative polymer 7 has 163 mm. Further, the amount of addition necessary for obtaining the same flow value as Invention polymer 8 is 0.12 wt%, which requires more amount of addition than Invention polymer 8 by 20%. In this way, it is known that Invention polymer 8 obtained by living radical polymerization of the present invention has better cement dispersing performance. Also, in the comparison of Invention polymer 8 and Comparative polymer 7 on degree of dispersion (Mw/Mn), while Invention polymer 8 has 1.35, Comparative polymer 7 has 1,82, it is known that Invention polymer 8 has narrower molecular weight distribution. Invention polymer 8 has a narrow molecular weight distribution and reduced parts of high molecular weight causing cement coagulation and low molecular weight not contributing to cement dispersing performance, more parts of molecular weight contributing to cement dispersing performance than Comparative polymer 7, which is thought to result in the improved cement dispersing performance.

Production example 45: Synthesis of ditelluride compound

6.38 g (50 mmol) of metal tellurium was suspended in 50 mL of THF, 50 mL (57 mmol) of methyl lithium of 1.14 M diethyl ether solution was slowly added to the suspension at room temperature over 10 minutes. The resultant reaction solution was stirred until metal tellurium was completely disappeared (20 minutes). To the reaction solution, 20 mL of saturated aqueous $NH_4Cl$ solution was added in ambient atmosphere and vigorously stirred at room temperature for 10 hours. After completion of reaction, a target product was extracted with diethyl ether, solvent was distilated using an evaporator. The crude product obtained was distilled to yield a target dimethyl ditelluride compound. It was identified as a target substance using $^1H$-NMR.

Production example 46: Synthesis of Invention polymer 9

In a glove box whose inside was replaced with nitrogen, 0.267 mmol of V-50, 0.534 mmol of compound produced in Synthesis example 1, 0.534 mmol of compound produced in Synthesis example 2, 11.27 mmol of methoxypolyethylene glycol monomethacrylate (average addition number of mole of 25 of ethylene oxide) and 30.85 mmol of methacrylic acid were stirred at 60°C for 3 hours to obtain Invention polymer 9.
The results of GPC analysis and TCAV are shown in Table 15.

Production example 47: Synthesis of Invention polymer 10

In a glove box whose inside was replaced with nitrogen, 0.1594 mmol of V-50, 0.3097 mmol of compound produced in Synthesis example 1, 0.3097 mmol of compound produced in Synthesis example 2, 12.09 mmol of methoxypolyethylene glycol monomethacrylate (average addition number of mole of 25 of ethylene oxide) and 30.97 mmol of methacrylic acid were stirred at 60°C for 3 hours to obtain Invention polymer 10. The results of GPC analysis and TCAV are shown in Table 15.

Production example 48: Synthesis of Comparative polymer 8

In a glass reaction apparatus equipped with a thermometer, a stirring machine, a dripping machine, a nitrogen introducing tube and a reflux condenser, 1700 g of water was loaded, and heated to 80°C while the inside of reaction apparatus was replaced with nitrogen in 100 mL/min under stirring at 200 rpm. Subsequently, while maintaining the reaction apparatus at 80°C, into the reaction apparatus, a mixture of 1580 g of methoxypolyethylene glycol monomethacrylate (average addition number of mole of 25 of ethylene oxide), 420 g of methacrylic acid and 14.5 g of 3-mercaptopropionic acid being added to 500 g of ion-exchanged water was added dropwise over 4 hours, 230 g of 10% aqueous ammonium persulfate solution was added dropwise over 5 hours respectively at a uniform speed. After completion of all droppings, the polymerization reaction was completed by maintaining a temperature at 80°C further for 1 hour to produce Comparative polymer 8. The obtained polymer had Mw= 25200, and Mw/Mn = 1.89.

Production example 49: Synthesis of Comparative polymer 9

In a glass reaction apparatus equipped with a thermometer, a stirring machine, a dripping machine, a nitrogen introducing tube and a reflux condenser, 1698 g of water was loaded, and heated to 80°C while the inside of reaction apparatus was replaced with nitrogen in 100 mL/min under stirring at 200 rpm. Subsequently, while maintaining the reaction apparatus at 80°C, into the reaction apparatus, a mixture of 1796 g of methoxypolyethylene glycol monomethacrylate (average addition number of mole of 25 of ethylene oxide), 204g of methacrylic acid and 16.7 g of 3-mercaptopropionic acid being added to 500 g of ion-exchanged water was added dropwise over 4 hours, 230 g of 10% aqueous ammonium persulfate solution was added dropwise over 5 hours respectively at a uniform speed. After completion of all droppings, the polymerization reaction was completed by maintaining a temperature at 80°C further for 1 hour to produce Comparative polymer 9. The obtained polymer had Mw = 22500, and Mw/Mn = 1.83.

Table 15

| Polymer | GPC measurement of molecular weight | | TCAV (KOHmg) | Polymer net content (%) |
|---|---|---|---|---|
| | Mw | Mw/Mn | | |
| Invention polymer 9 | 26700 | 1.55 | 107.15 | 91.0 |
| Invention polymer 10 | 27300 | 1.62 | 64.4 | 94.0 |
| Comparative polymer 8 | 25200 | 1.89 | 107.4 | 96.6 |
| Comparative polymer 9 | 22500 | 1.83 | 66.05 | 95.7 |

<Examples 16 to 19 and Comparative Examples 17 to 18>

According to the method in the above mortar test 2, a mortar test was conducted by using Invention polymer 9 (Examples 16 to 17), Invention polymer 10 (Examples 18 to 19), Comparative polymer 8 (Comparative Example 17), Comparative polymer 9 (Comparative Example 18). The result is shown in Tables 16 to 17.

Table 16

| | Polymer used | GPC measurement of molecular weight | | Mortar rest | | |
|---|---|---|---|---|---|---|
| | | Mw | Mw/Mn | Amount of agent added (wt%/C) | Flow value (mm) | Amount of air (%) |
| Example 16 | Invention polymer 9 | 26700 | 1.55 | 0.07 | 217 | 3.30 |
| Example 17 | Invention polymer 9 | 26700 | 1.55 | 0.10 | 255 | 2.85 |
| Comparative Example 17 | Comparative polymer 8 | 25200 | 1.89 | 0.10 | 219 | 3.14 |

When the mortar flow values are compared to for Invention polymer 9 obtained by living radical polymerization and Comparative polymer 8 obtained by a conventional radical polymerization, while Invention polymer 9 has the flow value of 225 mm at 0.1 wt% addition amount, Comparative polymer 8 has 219 mm. Further, the amount of addition necessary for obtaining the same flow value as Comparative polymer 8 is 0.07 wt%, which allows less amount of addition than Comparative polymer 8 by 30%. In this way, it is known that a polymer obtained by living radical polymerization of the present invention has better cement dispersing performance. Also, in the comparison of Invention polymer 9 and Comparative polymer 8 on degree of dispersion (Mw/Mn), while Invention polymer 9 has 1.55, Comparative polymer 8

has 1.89, it is known that Invention polymer 9 has narrower molecular weight distribution. Invention polymer 9 has a narrow molecular weight distribution and reduced parts of high molecular weight causing cement coagulation and low molecular weight not contributing to cement dispersing performance, more parts of molecular weight contributing to cement dispersing performance than Comparative polymer 8, which is thought to result in the improved cement dispersing performance.

Table 17

| | Polymer used | GPC measurement of molecular weight | | Mortar test | | |
|---|---|---|---|---|---|---|
| | | Mw | Mw/Mn | Amount of agent added (wt%/C) | Flow value (mm) | Amount of air (%) |
| Example 18 | Invention polymer 10 | 27300 | 1.62 | 0.11 | 220 | 2.40 |
| Example 19 | Invention polymer 10 | 27300 | 1.62 | 0.14 | 265 | 2.61 |
| Comparative Example 18 | Comparative polymer 9 | 22500 | 1.83 | 0.14 | 223 | 2.40 |

When the mortar flow values are compared to for Invention polymer 10 obtained by living radical polymerization and Comparative polymer 9 obtained by a conventional radical polymerization, while Invention polymer 10 has the flow value of 265 mm at 0.14 wt% addition amount, Comparative polymer 9 has 223 mm. Further, the amount of addition necessary for obtaining the same flow value as Comparative polymer 9 is 0.11 wt%, which allows less amount of addition than Comparative polymer 9 by 21%. In this way, it is known that a polymer obtained by living radical polymerization of the present invention has better cement dispersing performance. Also, in the comparison of Invention polymer 10 and Comparative polymer 9 on degree of dispersion (Mw/Mn), while Invention polymer 10 has 1.62, Comparative polymer 9 has 1.83, it is known that Invention polymer 10 has narrower molecular weight distribution. Invention polymer 10 has a narrow molecular weight distribution and reduced parts of high molecular weight causing cement coagulation and low molecular weight not contributing to cement dispersing performance, more parts of molecular weight contributing to cement dispersing performance than Comparative polymer 9, which is thought to result in the improved cement dispersing performance.

## Claims

1. A polymer (P) containing a constitutional unit derived from a polyoxyalkylene chain and a constitutional unit having a site derived from a carboxyl group, the polymer (P) satisfying a range of PD value defined as the following mathematical formula 1:

$$1 < PD < MD - 0.2 \quad \text{(Formula 1)}$$

wherein PD = Mw/Mn, MD = G (n) × Mw + H (n), and G (n) × Mw is defined as the following mathematical formula 2:

$$G(n) \times Mw = \{-0.985 \times \ln(n) + 5.802\} \times 10^{-5} \times Mw \quad \text{(Formula 2)}$$

wherein Mw and Mn respectively represents a weight-average molecular weight and a number-average molecular weight of the polymer (P) measured by gel permeation chromatography (GPC), and H(n) is defined as the following mathematical formula 3:

$$H(n) = 4.513 \times 10^{-5} \times n^2 - 6.041 \times 10^{-3} \times n + 1.351 \quad \text{(Formula 3)}$$

wherein
the Mw value is 100,000 or less, wherein the constitutional unit derived from said polyoxyalkylene chain comprises a constitutional unit (I) shown in the following chemical formula 5:

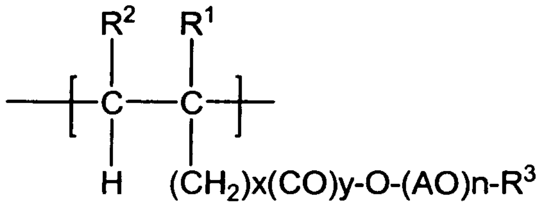

(Chemical formula 5)

wherein $R^1$ and $R^2$ each independently represent a hydrogen atom or a methyl group; AO each independently represents one sort of oxyalkylene groups with carbon atoms of 2 or more, or a mixture of 2 or more sorts thereof, the mixture may be added in a block or random manner; x represents an integer of 0 to 2, y represents 0 or 1, n represents an average addition number of moles of oxyalkylene groups being 1 to 300; and $R^3$ represents a hydrogen atom or a hydrocarbon group with carbon atoms of 1 to 20, and
wherein a ratio of the oxyalkylene group having two carbon atoms to the total of the oxyalkylene group is 60 mole% or more.

2. The polymer (P) containing a constitutional unit derived from a polyalkylene glycol chain according to claim 1, wherein the polymer (P) obtained by polymerization of unsaturated monomers (M) containing an unsaturated polyalkylene glycol based monomer (I-M) using a mixture of an organometallic compound shown in the following chemical formula 1:

(M) a (L) b (X) c (Chemical formula 1)

wherein M represents a transition element belonging to the fourth period and L is represented by the following chemical formula 2:

(Al) d (AO) e (AS) f (Chemical formula 2)

wherein Al represents alkyleneimine, AO represents alkylene oxide and AS represents alkylene sulfide; X represents halogen; and a, b, c, d, e and f each independently represent a number of not less than 0 and an organic halogen compound.

3. The polymer (P) containing a constitutional unit derived from a polyalkylene glycol chain according to claim 1, wherein the polymer (P) is a polymer obtained by polymerization of unsaturated monomers (M) containing an unsaturated polyalkylene glycol based monomer (I-M) using a radical polymerization initiator and an organotellurium compound shown in the following chemical formula 3:

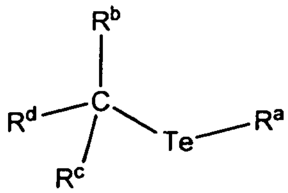

(Chemical formula 3)

wherein $R^a$ represents an alkyl group with carbon atoms of 1 to 8, an aryl group, a substituted aryl group or an aromatic heterocyclic group; $R^b$ and $R^c$ each independently represent a hydrogen atom or an alkyl group with carbon atoms of 1 to 8; $R^d$ represents an aryl group, a substituted aryl group, an aromatic heterocyclic group, an acyl group,

an oxycarbonyl group or a cyano group; and/or, a ditelluride compound shown in the following chemical formula 4:

$$R^fTe - TeR^g$$ (Chemical formula 4)

wherein $R^f$ and $R^g$ each independently represent an alkyl group with carbon atoms of 1 to 8, an aryl group, a substituted aryl group or an aromatic heterocyclic group.

**4.** The polymer according to claim 1, wherein the constitutional unit having a site derived from said carboxyl group comprises a constitutional unit (II) represented by the following chemical formula 6:

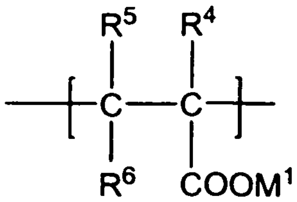

(Chemical formula 6)

wherein $R^4$, $R^5$ and $R^6$ each independently represent a hydrogen atom or a methyl group, $-(CH_2)_ZCOOM^2$, which may be an anhydride formed with $COOM^1$ or other- $(CH_2)_ZCOOM^2$; z represents an integer of 0 to 2; $M^1$ and $M^2$ each independently represent a hydrogen atom, an alkali metal element, an alkali earth metal element, an ammonium group or an organic amine group.

**5.** A production method of said polymer (P) according to claim 1, containing a constitutional unit derived from a polyoxyalkylene chain, the production method for living polymerization of unsaturated monomers (M) containing an unsaturated monomer (I-M) having a polyoxyalkylene chain.

**6.** The production method according to claim 5 for living polymerization of unsaturated monomers (M) containing an unsaturated polyalkylene glycol based monomer (I-M) using a mixture of an organometallic compound and an organic halogen compound, the organometallic compound being shown in the following chemical formula 1:

(M) a (L) b (X) c (Chemical formula 1)

wherein M represents a transition element belonging to the fourth period and L is represented by the following chemical formula 2:

(AI) d (AO) e (AS) f (Chemical formula 2)

wherein AI represents alkyleneimine, AO represents alkylene oxide and AS represents alkylene sulfide; X represents halogen; and a, b, c, d, e and f each independently represent a number of not less than 0.

**7.** The production method according to claim 5 for living polymerization of unsaturated monomers (M) containing an unsaturated polyalkylene glycol based monomer (I-M) using a radical polymerization initiator and an organotellurium compound shown in the following chemical formula (3):

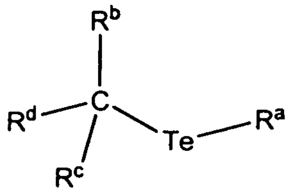

(Chemical formula 3)

wherein $R^a$ represents an alkyl group with carbon atoms of 1 to 8, an aryl group, a substituted aryl group or an

aromatic heterocyclic group; $R^b$ and $R^c$ each independently represent a hydrogen atom or an alkyl group with carbon atoms of 1 to 8; $R^d$ represents an aryl group, a substituted aryl group, an aromatic heterocyclic group, an acyl group, an oxycarbonyl group or a cyano group; and/or, a ditelluride compound shown in the following chemical formula 4:

$R^fTe - TeR^g$ (Chemical formula 4)

wherein $R^f$ and $R^g$ each independently represent an alkyl group with carbon atoms of 1 to 8, an aryl group, a substituted aryl group or an aromatic heterocyclic group.

**8.** The production method according to any one of claims 5 to 7, wherein said monomer (M) comprises an unsaturated monomer (II-M) having a site derived from a carboxyl group.

**9.** The production method according to any one of claims 5 to 8, wherein the unsaturated monomer (I-M) having said polyoxyalkylene chain is an unsaturated monomer represented by the following chemical formula 7:

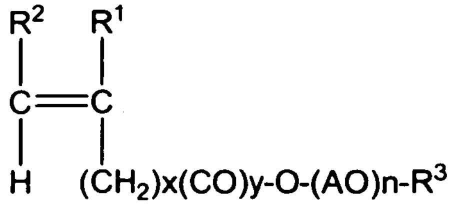

(Chemical formula 7)

wherein $R^1$ and $R^2$ each independently represent a hydrogen atom or a methyl group; AO each independently represents one sort of oxyalkylene groups with carbon atoms of 2 or more, or a mixture of 2 or more sorts thereof, the mixture may be added in a block or random manner; x represents an integer of 0 to 2, y represents 0 or 1, n represents an average addition number of moles of oxyalkylene groups being 1 to 300; and $R^3$ represents a hydrogen atom or a hydrocarbon group with carbon atoms of 1 to 20.

**10.** The production method according to claim 8, wherein the unsaturated monomer (II- M) having a site derived from said carboxyl group is an unsaturated monomer represented by the following chemical formula 8:

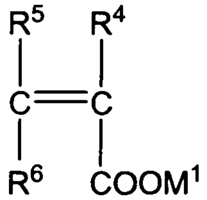

(Chemical formula 8)

wherein $R^4$, $R^5$ and $R^6$ each independently represent a hydrogen atom or a methyl group, $-(CH_2)_ZCOOM^2$, which may be an anhydride formed with $COOM^1$ or other- $(CH_2)_ZCOOM^2$; z represents an integer of 0 to 2; $M^1$ and $M^2$ each independently represent a hydrogen atom, an alkali metal element, an alkali earth metal element, an ammonium group or an organic amine group, a hydrocarbon group with carbon atoms of 1 to 20 or a silyl group having a hydrocarbon group with carbon atoms of 3 to 18.

**11.** A cement admixture comprising the polymer as an essential compound according to any one of claims 1 to 4.

**12.** A cement admixture comprising a polymer (P) as an essential component, which polymer (P) is produced by the production method according to any one of claims 5 to 10.

**13.** The use of a catalyst which is a mixture of an organometallic compound and an organic halogen compound, the organometallic compound being shown in the following chemical formula 1:

(M) a (L) b (X) c (Chemical formula 1)

wherein M represents a transition element belonging to the fourth period and L is represented by the following chemical formula 2:

(AI) d (AO) e (AS) f (Chemical formula 2)

wherein AI represents alkyleneimine, AO represents alkylene oxide and AS represents alkylene sulfide; X represents halogen; and a, b, c, d, e and f each independently represent a number of not less than 0, and the organic halogen compound being represented by the following chemical formula 9:

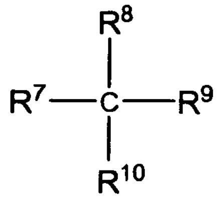

(Chemical formula 9)

wherein $R^7$, $R^8$, $R^9$, and $R^{10}$ each independently represent a hydrogen atom, a hydrocarbon group, or a halogen atom, wherein the hydrocarbon group may contain one or more halogen atoms or hetero atoms, and wherein the catalyst is used for living polymerization of unsaturated monomers (M) containing an unsaturated monomer (I-M) having a polyoxyalkylene chain to produce the polymer (P) containing the constitutional unit derived from a polyoxyalkylene chain according to claim 1.

## Patentansprüche

1. Polymer (P), enthaltend eine konstituierende Einheit, abgeleitet von einer Polyoxyalkylenkette, und eine konstituierende Einheit mit einer von einer Carboxylgruppe abgeleiteten Stelle, wobei das Polymer (P) einem Bereich eines PD-Wertes, definiert als die folgende mathematische Formel 1, genügt:

$$1 < PD < MD - 0{,}2 \quad \text{(Formel 1)}$$

wobei PD = Mw/Mn, MD = G (n) x Mw + H (n), und G (n) x Mw als die folgende mathematische Formel 2 definiert ist:

$$G(n) \times Mw = \{-0{,}985 \times \ln(n) + 5{,}802\} \times 10^{-5} \times Mw \quad \text{(Formel 2)}$$

wobei Mw und Mn jeweils ein gewichtsgemitteltes Molekulargewicht und ein zahlengemitteltes Molekulargewicht des Polymers (P), gemessen durch Gelpermeationschromatographie (GPC), darstellt, und H (n) als die folgende mathematische Formel 3 definiert ist:

$$H(n) = 4{,}513 \times 10^{-5} \times n^2 - 6{,}041 \times 10^{-3} \times n + 1{,}351 \quad \text{(Formel 3)}$$

wobei der Mw-Wert 100.000 oder weniger ist, wobei die konstituierende Einheit, abgeleitet von der Polyoxyalkylenkette, eine in der folgenden Chemischen Formel 5 dargestellte konstituierende Einheit (I) umfaßt:

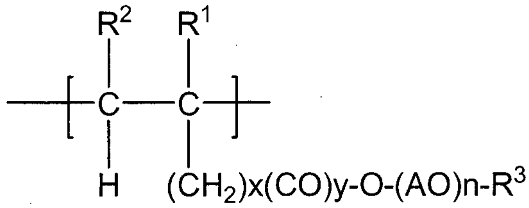

(Chemische Formel 5)

wobei $R^1$ und $R^2$ jeweils unabhängig ein Wasserstoffatom oder eine Methylgruppe darstellen, AO jeweils unabhängig eine Sorte von Oxyalkylengruppen mit 2 oder mehr Kohlenstoffatomen oder ein Gemisch aus 2 oder mehr Sorten davon darstellt, wobei das Gemisch in einem Block oder in zufälliger Weise zugegeben sein kann, x eine ganze Zahl von 0 bis 2 darstellt, y 0 oder 1 darstellt, n eine mittlere Additionsanzahl von Molen von Oxyalkylengruppen von 1 bis 300 darstellt, und $R^3$ ein Wasserstoffatom oder eine Kohlenwasserstoffgruppe mit von 1 bis 20 Kohlenstoffatomen darstellt, und wobei ein Verhältnis der Oxyalkylengruppe mit zwei Kohlenstoffatomen zu der Gesamtheit der Oxyalkylengruppe 60 Mol-% oder mehr beträgt.

**2.** Polymer (P), enthaltend eine konstituierende Einheit, abgeleitet von einer Polyalkylenglykolkette nach Anspruch 1, wobei das Polymer (P) durch Polymerisation von ungesättigten Monomeren (M), enthaltend ein Monomer (I- M) auf Basis eines ungesättigten Polyalkylenglykols, unter Verwendung eines Gemisches einer in der folgenden Chemischen Formel 1 dargestellten organometallischen Verbindung,

(M) a (L) b (X) c (Chemische Formel 1)

wobei M ein Übergangselement darstellt, welches zur vierten Periode gehört, und L durch die folgende Chemische Formel 2 dargestellt ist:

(Al) d (AO) e (AS) f (Chemische Formel 2)

wobei Al Alkylenimin darstellt, AO Alkylenoxid darstellt, und AS Alkylensulfid darstellt, X Halogen darstellt, und a, b, c, d, e und f, jeweils unabhängig, eine Zahl von nicht weniger als 0 darstellen,
und einer organischen Halogenverbindung erhalten ist.

**3.** Polymer (P), enthaltend eine konstituierende Einheit, abgeleitet von einer Polyalkylenglykolkette nach Anspruch 1, wobei das Polymer (P) ein Polymer ist, erhalten durch Polymerisation eines ungesättigten Monomers (M), enthaltend ein Monomer auf Basis eines ungesättigten Polyalkylenglykols (I-M), unter Verwendung eines Radikalpolymerisationsinitiators und einer in der folgenden Chemischen Formel 3 dargestellten Organotellurverbindung:

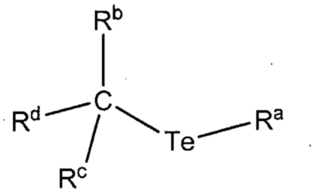

(Chemische Formel 3)

wobei $R^a$ eine Alkylgruppe mit von 1 bis 8 Kohlenstoffatomen, eine Arylgruppe, eine substituierte Arylgruppe oder eine aromatische heterocyclische Gruppe darstellt, $R^b$ und $R^c$ jeweils unabhängig ein Wasserstoffatom oder eine Alkylgruppe mit 1 bis 8 Kohlenstoffatomen darstellen, $R^d$ eine Arylgruppe, eine substituierte Arylgruppe, eine aromatische heterocyclische Gruppe, eine Acylgruppe, eine Oxycarbonylgruppe oder eine Cyanogruppe darstellt, und/ oder einer in der folgenden Chemischen Formel 4 dargestellten Ditelluridverbindung:

$R^fTe - TeR^g$ (Chemische Formel 4)

wobei $R^f$ und $R^g$ jeweils unabhängig eine Alkylgruppe mit von 1 bis 8 Kohlenstoffatomen, eine Arylgruppe, eine substituierte Arylgruppe oder eine aromatische heterocyclische Gruppe darstellen.

**4.** Polymer nach Anspruch 1, wobei die konstituierende Einheit mit einer Stelle, abgeleitet von der Carboxylgruppe, eine durch die folgende Chemische Formel 6 dargestellte konstituierende Einheit (II) umfasst:

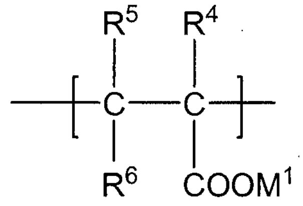

(Chemische Formel 6)

wobei $R^4$, $R^5$ und $R^6$ jeweils unabhängig ein Wasserstoffatom oder eine Methylgruppe, - $(CH_2)_zCOOM^2$, welches ein mit $COOM^1$ oder einem anderen- $(CH_2)_zCOOM^2$ gebildetes Anhydrid sein kann, darstellen, z eine ganze Zahl von 0 bis 2 darstellt, $M^1$ und $M^2$ jeweils unabhängig ein Wasserstoffatom, ein Alkalimetallelement, ein Erdalkalimetallelement, eine Ammoniumgruppe oder eine organische Amingruppe darstellen.

**5.** Herstellungsverfahren des Polymers (P) nach Anspruch 1, enthaltend eine konstituierende Einheit, abgeleitet von einer Polyoxyalkylenkette, wobei das Herstellungsverfahren für lebende Polymerisation von ungesättigten Monomeren (M) ein ungesättigtes Monomer (I-M) mit einer Polyoxyalkylenkette enthält.

**6.** Herstellungsverfahren nach Anspruch 5 für lebende Polymerisation von ungesättigten Monomeren (M), enthaltend ein Monomer (I-M) auf Basis eines ungesättigten Polyalkylenglykols, unter Verwendung eines Gemisches einer organometallischen Verbindung und einer organischen Halogenverbindung, wobei die organometallische Verbindung in der folgenden Chemischen Formel 1 dargestellt ist:

(M) a (L) b (X) c (Chemische Formel 1)

wobei M ein Übergangselement darstellt, welches zu der vierten Periode gehört, und L durch die folgende Chemische Formel 2 dargestellt ist:

(Al) d (AO) e (AS) f (Chemische Formel 2)

wobei Al Alkylenimin darstellt, AO Alkylenoxid darstellt, und AS Alkylensulfid darstellt, x Halogen darstellt, und a, b, c, d, e und f jeweils unabhängig eine Zahl von nicht weniger als 0 darstellen.

**7.** Herstellungsverfahren nach Anspruch 5 für lebende Polymerisation von ungesättigten Monomeren (M), enthaltend ein Monomer (I-M) auf Basis eines ungesättigten Polyalkylenglykols, unter Verwendung eines Radikalpolymerisationsinitiators und einer in der folgenden Chemischen Formel (3) gezeigten Organotellurverbindung:

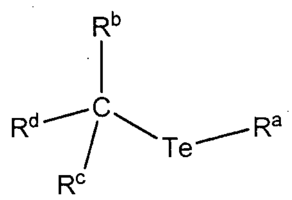

(Chemische Formel 3)

wobei $R^a$ eine Alkylgruppe mit von 1 bis 8 Kohlenstoffatomen, eine Arylgruppe, eine substituierte Arylgruppe oder eine aromatische heterocyclische Gruppe darstellt, $R^b$ und $R^c$ jeweils unabhängig ein Wasserstoffatom oder eine Alkylgruppe mit von 1 bis 8 Kohlenstoffatomen darstellen, $R^d$ eine Arylgruppe, eine substituierte Arylgruppe, eine aromatische heterocyclische Gruppe, eine Acylgruppe, eine Oxycarbonylgruppe oder eine Cyanogruppe darstellt, und/oder einer in der folgenden Chemischen Formel 4 dargestellten Ditelluridverbindung:

$R^fTe - TeR^g$ (Chemische Formel 4)

wobei $R^f$ und $R^g$ jeweils unabhängig eine Alkylgruppe mit von 1 bis 8 Kohlenstoffatomen, eine Arylgruppe, eine substituierte Arylgruppe oder eine aromatische heterocyclische Gruppe darstellen.

**8.** Herstellungsverfahren nach einem der Ansprüche 5 bis 7, wobei das Monomer (M) ein ungesättigtes Monomer (II-M) mit einer von einer Carboxylgruppe abgeleiteten Stelle umfaßt.

**9.** Herstellungsverfahren nach einem der Ansprüche 5 bis 8, wobei das ungesättigte Monomer (I-M) mit der Polyoxyalkylenkette ein durch die folgende Chemische Formel 7 dargestelltes ungesättigtes Monomer ist:

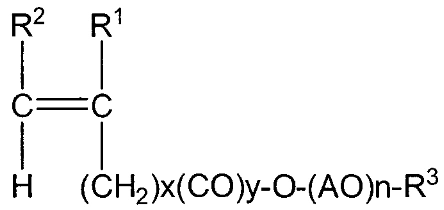

(Chemische Formel 7)

wobei $R^1$ und $R^2$ jeweils unabhängig ein Wasserstoffatom oder eine Methylgruppe darstellen, AO jeweils unabhängig eine Sorte von Oxyalkylengruppen mit 2 oder mehr Kohlenstoffatomen oder ein Gemisch von 2 oder mehr Sorten davon, darstellt, wobei das Gemisch in einem Block oder in zufälliger Weise zugegeben werden kann, x eine ganze Zahl von 0 bis 2 darstellt, y 0 oder 1 darstellt, n eine mittlere Additionsanzahl von Molen von Oxyalkylengruppen von 1 bis 300 darstellt, und $R^3$ ein Wasserstoffatom oder eine Kohlenwasserstoffgruppe mit von 1 bis 20 Kohlenstoffatomen darstellt.

**10.** Herstellungsverfahren nach Anspruch 8, wobei das ungesättigte Monomer (II- M) mit einer von der Carboxylgruppe abgeleiteten Stelle ein durch die folgende Chemische Formel 8 dargestelltes ungesättigtes Monomer ist:

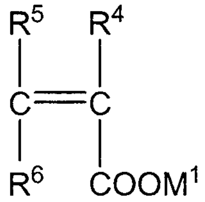

(Chemische Formel 8)

wobei $R^4$, $R^5$ und $R^6$ jeweils unabhängig ein Wasserstoffatom oder eine Methylgruppe, $-(CH_2)_zCOOM^2$, welches ein mit $COOM^1$ oder einem anderen- $(CH_2)_zCOOM^2$ gebildetes Anhydrid sein kann, darstellen, z eine ganze Zahl von 0 bis 2 darstellt, $M^1$ und $M^2$ jeweils unabhängig ein Wasserstoffatom ein Alkalimetallelement, ein Erdalkalimetallelement, eine Ammoniumgruppe oder eine organische Amingruppe, eine Kohlenwasserstoffgruppe mit von 1 bis 20 Kohlenstoffatomen oder eine Silylgruppe mit einer Kohlenwasserstoffgruppe mit 3 bis18 Kohlenstoffatomen darstellen.

**11.** Zementgemisch, umfassend das Polymer nach einem der Ansprüche 1 bis 4, als eine wesentliche Verbindung.

**12.** Zementgemisch, umfassend ein Polymer (P) als eine wesentliche Komponente, wobei das Polymer (P) durch das Herstellungsverfahren nach einem der Ansprüche 5 bis 10 hergestellt ist.

**13.** Verwendung eines Katalysators, welcher ein Gemisch einer Organometallverbindung und einer organischen Halogenverbindung ist, wobei die Organometallverbindung in der folgenden Chemischen Formel 1 dargestellt ist:

(M) a (L) b (X) c (Chemische Formel 1)

wobei M ein Übergangselement darstellt, welches zu der vierten Periode gehört, und L durch die folgende Chemische Formel 2 dargestellt ist:

(Al) d (AO) e (AS) f (Chemische Formel 2)

wobei Al Alkylenimin darstellt, AO Alkylenoxid darstellt, und AS Alkylensulfid darstellt, X Halogen darstellt, und a, b, c, d, e und f jeweils unabhängig eine Zahl von nicht weniger als 0 darstellen, und die organischen Halogenverbindung in der folgenden Chemischen Formel 9 dargestellt ist:

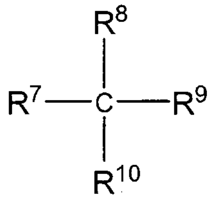

(Chemische Formel 9)

wobei $R^7$, $R^8$, $R^9$ und $R^{10}$ jeweils unabhängig ein Wasserstoffatom, eine Kohlenwasserstoffgruppe oder ein Halogenatom darstellen, wobei die Kohlenwasserstoffgruppe ein oder mehrere Halogenatome oder Heteroatome enthalten kann,
und wobei der Katalysator für lebende Polymerisation von ungesättigten Monomeren (M) verwendet wird, enthaltend ein ungesättigtes Monomer (I-M) mit einer Polyoxyalkylenkette, um das Polymer (P) herzustellen, enthaltend die konstituierende Einheit, abgeleitet von einer Polyoxyalkylenkette nach Anspruch 1.

## Revendications

**1.** Polymère (P) contenant un motif constitutionnel dérivé d'une chaîne de polyoxyalkylène et un motif constitutionnel possédant un site dérivé d'un groupe carboxyle, le polymère (P) satisfaisant une plage de valeurs de PD définies par la formule mathématique 1 suivante :

$$1 < PD < MD - 0{,}2 \qquad \text{(Formule 1)}$$

dans laquelle PD = Mw/Mn, MD = G(n) X Mw + H(n) et G(n) X Mw est défini par la formule mathématique 2 suivante :

$$G(n) \times Mw = \{-0{,}985 \times \ln(n) + 5{,}802\} \times 10^{-5} \times Mw \qquad \text{(Formule 2)}$$

dans laquelle Mw et Mn représentent respectivement un poids moléculaire moyen en poids et un poids moléculaire moyen en nombre du polymère (P) mesurés par chromatographie de perméation sur gel (CPG), et
H(n) est défini par la formule mathématique 3 suivante :

$$H(n) = 4{,}513 \times 10^{-5} \times n^2 - 6{,}041 \times 10^{-3} \times n + 1{,}351 \qquad \text{(Formule 3)}$$

la valeur de Mw étant inférieure ou égale à 100 000, le motif constitutionnel dérivé de ladite chaîne de polyoxyalkylène comprenant un motif constitutionnel (I) représenté par la formule chimique 5 suivante :

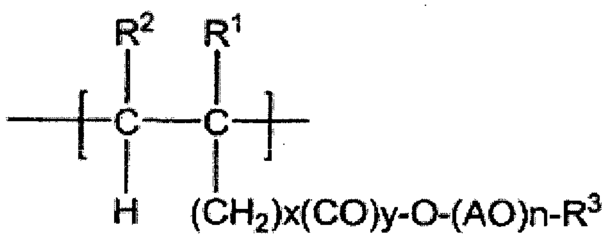

(Formule chimique 5)

dans laquelle $R^1$ et $R^2$ représentent chacun indépendamment un atome d'hydrogène ou un groupe méthyle ; les OA représentent chacun indépendamment un type de groupes oxyalkylènes contenant 2 ou plus de 2 atomes de carbone, ou un mélange de 2 ou de plus de 2 types de ceux-ci, le mélange pouvant être ajouté d'une manière séquence ou aléatoire ; x représente un nombre entier de 0 à 2, y représente 0 ou 1, n représente un nombre d'addition moyen de moles de groupes oxyalkylènes allant de 1 à 300 ; et $R^3$ représente un atome d'hydrogène ou un groupe hydrocarboné contenant 1 à 20 atomes de carbone, et le rapport entre le groupe oxyalkylène contenant deux atomes de carbone et tous les groupes oxyalkylènes est supérieur ou égale à 60 % en mole

2. Polymère (P) contenant un motif constitutionnel dérivé d'une chaîne de polyalkylène glycol selon la revendication 1, dans lequel le polymère (P) est obtenu par la polymérisation de monomères insaturés (M) contenant un monomère (I- M) à base d'un polyalkylène glycol insaturé en utilisant un mélange contenant un composé organométallique représenté par la formule chimique 1 suivante :

   (M) a (L) b (X) c (Formule chimique 1)

   dans laquelle M représente un élément de transition appartenant à la quatrième période et L est représenté par la formule chimique 2 suivante :

   (Al) d (OA) e (SA) f (Formule chimique 2)

   dans laquelle Al représente une alkylèneimine, OA représente un oxyde d'alkylène et SA représente un sulfure d'alkylène ; X représente un halogène ; et a, b, c, d, e et f représentent chacun indépendamment un nombre qui n'est pas inférieur à 0, et un composé organique halogéné.

3. Polymère (P) contenant un motif constitutionnel dérivé d'une chaîne de polyalkylène glycol selon la revendication 1, dans lequel le polymère (P) est un polymère obtenu par la polymérisation de monomères insaturés (M) contenant un monomère (I- M) à base d'un polyalkylène glycol insaturé en utilisant un initiateur de polymérisation radicalaire et un composé d'organotellure représenté par la formule chimique 3 suivante :

   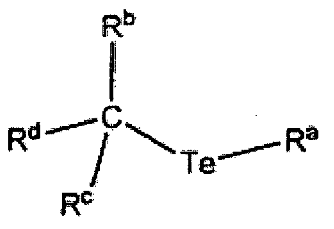

   (Formule chimique 3)

   dans laquelle $R^a$ représente un groupe alkyle contenant 1 à 8 atomes de carbone, un groupe aryle, un groupe aryle substitué ou un groupe hétérocyclique aromatique ; $R^b$ et $R^c$ représentent chacun indépendamment un atome d'hydrogène ou un groupe alkyle contenant 1 à 8 atomes de carbone ; $R^d$ représente un groupe aryle, un groupe aryle substitué, un groupe hétérocyclique aromatique, un groupe acyle, un groupe oxycarbonyle ou un groupe cyano ; et/ou

   un composé de ditellulure représenté par la formule chimique 4 suivante :

   $R^fTe$- $TeR^g$ (Formule chimique 4)

   dans laquelle $R^f$ et $R^g$ représentent chacun indépendamment un groupe alkyle contenant 1 à 8 atomes de carbone, un groupe aryle, un groupe aryle substitué ou un groupe hétérocyclique aromatique.

**4.** Polymère selon la revendication 1, dans lequel le motif constitutionnel possédant un site dérivé dudit groupe carboxyle comprend un motif constitutionnel (II) représenté par la formule chimique 6 suivante :

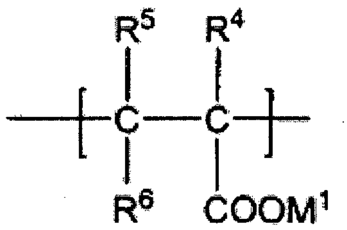

(Formule chimique 6)

dans laquelle $R^4$, $R^5$ et $R^6$ représentent chacun indépendamment un atome d'hydrogène ou un groupe méthyle, $-(CH_2)_zCOOM^2$, qui peut être un anhydride formé avec $COOM^1$ ou un autre- $(CH_2)_zCOOM^2$ ; z représente un nombre entier de 0 à 2 ; $M^1$ et $M^2$ représentent chacun indépendamment un atome d'hydrogène, un élément métallique alcalin, un élément métallique alcalinoterreux, un groupe ammonium ou un groupe aminé organique.

**5.** Procédé de production dudit polymère (P) selon la revendication 1, contenant un motif constitutionnel dérivé d'une chaîne de polyoxyalkylène, le procédé de production permettant la polymérisation vivante de monomères insaturés (M) contenant un monomère insaturé (I-M) possédant une chaîne de polyoxyalkylène.

**6.** Procédé de production selon la revendication 5, pour la polymérisation vivante de monomères insaturés (M) contenant un monomère (I- M) à base d'un polyalkylène glycol insaturé en utilisant un mélange contenant un composé organométallique et un composé organique halogéné, le composé organométallique étant représenté par la formule chimique 1 suivante :

(M) a (L) b (X) c (Formule chimique 1)

dans laquelle M représente un élément de transition appartenant à la quatrième période et L est représenté par la formule chimique 2 suivante :

(Al) d (OA) e (SA) f (Formule chimique 2)

dans laquelle Al représente une alkylèneimine, OA représente un oxyde d'alkylène et SA représente un sulfure d'alkylène ; X représente un halogène ; et a, b, c, d, e et f représentent chacun indépendamment un nombre qui n'est pas inférieur à O.

**7.** Procédé de production selon la revendication 5, pour la polymérisation vivante de monomères insaturés (M) contenant un monomère (I- M) à base d'un polyalkylène glycol insaturé en utilisant un initiateur de polymérisation radicalaire et un composé d'organotellure représenté par la formule chimique (3) suivante :

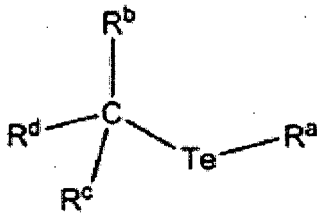

(Formule chimique 3)

dans laquelle $R^a$ représente un groupe alkyle contenant 1 à 8 atomes de carbone, un groupe aryle, un groupe aryle substitué ou un groupe hétérocyclique aromatique ; $R^b$ et $R^c$ représentent chacun indépendamment un atome d'hydrogène ou un groupe alkyle contenant 1 à 8 atomes de carbone ; $R^d$ représente un groupe aryle, un groupe aryle substitué, un groupe hétérocyclique aromatique, un groupe acyle, un groupe oxycarbonyle ou un groupe cyano ; et/ou

un composé de ditellulure représenté par la formule chimique 4 suivante :

$R^fTe- TeR^g$ (Formule chimique 4)

dans laquelle $R^f$ et $R^g$ représentent chacun indépendamment un groupe alkyle contenant 1 à 8 atomes de carbone, un groupe aryle, un groupe aryle substitué ou un groupe hétérocyclique aromatique.

**8.** Procédé de production selon l'une quelconque des revendications 5 à 7, dans lequel ledit monomère (M) comprend un monomère insaturé (II-M) possédant un site dérivé d'un groupe carboxyle.

**9.** Procédé de production selon l'une quelconque des revendications 5 à 8, dans lequel le monomère insaturé (I-M) possédant ladite chaîne de polyoxyalkylène est un monomère insaturé représenté par la formule chimique 7 suivante :

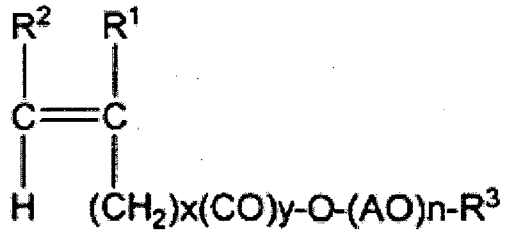

(Formule chimique 7)

dans laquelle $R^1$ et $R^2$ représentent chacun indépendamment un atome d'hydrogène ou un groupe méthyle ; les OA représentent chacun indépendamment un type de groupes oxyalkylènes contenant 2 ou plus de 2 atomes de carbone, ou un mélange de 2 ou de plus de 2 types de ceux-ci, le mélange pouvant être ajouté d'une manière séquencé ou aléatoire ; x représente un nombre entier de 0 à 2, y représente 0 ou 1, n représente un nombre d'addition moyen de moles de groupes oxyalkylènes allant de 1 à 300 ; et $R^3$ représente un atome d'hydrogène ou un groupe hydrocarboné contenant 1 à 20 atomes de carbone.

**10.** Procédé de production selon la revendication 8, dans lequel le monomère insaturé (II- M) possédant un site dérivé dudit groupe carboxyle est un monomère insaturé représenté par la formule chimique 8 suivante :

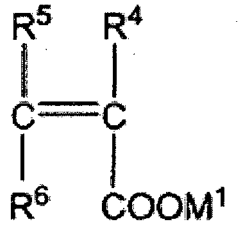

(Formule chimique 8)

dans laquelle $R^4$, $R^5$ et $R^6$ représentent chacun indépendamment un atome d'hydrogène ou un groupe méthyle, $-(CH_2)_zCOOM^2$, qui peut être un anhydride formé avec $COOM^1$ ou un autre- $(CH_2)_zCOOM^2$ ; z représente un nombre entier de 0 à 2 ; $M^1$ et $M^2$ représentent chacun indépendamment un atome d'hydrogène, un élément métallique alcalin, un élément métallique alcalinoterreux, un groupe ammonium ou un groupe aminé organique, un groupe hydrocarboné contenant 1 à 20 atomes de carbone ou un groupe silyle possédant un groupe hydrocarboné contenant 3 à 18 atomes de carbone.

**11.** Adjuvant pour ciment comprenant le polymère en tant que composé essentiel selon l'une quelconque des revendications 1 à 4.

**12.** Adjuvant pour ciment comprenant un polymère (P) en tant que composant essentiel, ledit polymère (P) étant produit par le procédé de production selon l'une quelconque des revendications 5 à 10.

**13.** Utilisation d'un catalyseur qui est un mélange contenant un composé organométallique et un composé organique

halogéné, le composé organométallique étant représenté par la formule chimique 1 suivante :

(M) a (L) b (X) c (Formule chimique 1)

dans laquelle M représente un élément de transition appartenant à la quatrième période et L est représenté par la formule chimique 2 suivante :

(Al) d (OA) e (SA) f (Formule chimique 2)

dans laquelle Al représente une alkylèneimine, OA représente un oxyde d'alkylène et SA représente un sulfure d'alkylène ; X représente un halogène ; et a, b, c, d, e et f représentent chacun indépendamment un nombre qui n'est pas inférieur à 0, et le composé organique halogéné est représenté par la formule chimique 9 suivante :

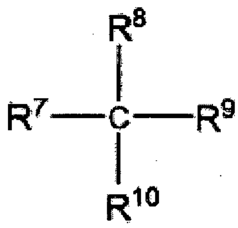

(Formule chimique 9)

dans laquelle $R^7$, $R^8$, $R^9$ et $R^{10}$ représentent chacun indépendamment un atome d'hydrogène, un groupe hydrocarboné ou un atome d'halogène, le groupe hydrocarboné pouvant contenir un ou plusieurs atomes d'halogène ou hétéroatomes, et

dans laquelle le catalyseur est utilisé pour la polymérisation vivante de monomères insaturés (M) contenant un monomère insaturé (I- M) possédant une chaîne de polyoxyalkylène pour produire un polymère (P) contenant le motif constitutionnel dérivé d'une chaîne de polyoxyalkylène selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI986990 B
- JP 2001220417 A
- JP 2005126459 A
- JP 2004323693 A
- JP HEI1113419 B
- JP HEI7267705 B
- JP 2508113 B
- JP SHOU62216950 B
- JP HEI1226757 B
- JP HEI536377 B
- JP HEI4149056 B
- JP HEI5170501 B
- JP HEI6191918 B
- JP HEI543288 B
- JP 1993 A
- JP SHOU5838380 B
- JP SHOU5918338 B
- JP SHOU62119147 B
- JP HEI6271347 B
- JP HEI6298555 B
- JP SHOU6268806 B
- JP HEI7223852 B
- JP HEI9241056 B